(19) Europäisches Patentamt
European Patent Office
Office européen des brevets

(11) **EP 4 586 682 A1**

(12) **EUROPEAN PATENT APPLICATION**
published in accordance with Art. 153(4) EPC

(43) Date of publication:
**16.07.2025 Bulletin 2025/29**

(21) Application number: **23896741.8**

(22) Date of filing: **27.11.2023**

(51) International Patent Classification (IPC):
***H04W 28/02*** (2009.01)

(52) Cooperative Patent Classification (CPC):
**H04W 28/02**

(86) International application number:
**PCT/CN2023/134405**

(87) International publication number:
**WO 2024/114592 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211521395**

(71) Applicant: **ZTE Corporation
Shenzhen, Guangdong 518057 (CN)**

(72) Inventors:
* **YUAN, Zhifeng
Shenzhen, Guangdong 518057 (CN)**
* **MA, Yihua
Shenzhen, Guangdong 518057 (CN)**
* **LI, Weimin
Shenzhen, Guangdong 518057 (CN)**
* **LI, Zhigang
Shenzhen, Guangdong 518057 (CN)**

(74) Representative: **Carangelo, Pierluigi et al
Jacobacci & Partners S.p.A.
Via Tomacelli 146
00186 Roma (IT)**

(54) **INFORMATION TRANSMISSION METHOD, COMMUNICATION DEVICE, AND STORAGE MEDIUM**

(57) Provided in the present application are an information transmission method, a communication device, and a storage medium. The method comprises: in a non-connected state, transmitting an information packet to a second communication node, wherein the information packet at least comprises one of the following pieces of information: a scheduling request; a buffer status report; terminal capability information; terminal type information; the number of transceiving antennas of a terminal; the number of transmission data streams supported by the terminal; and channel state information.

In an unconnected state, transmit an information packet to a second communication node, where the information packet at least includes one of: an SR; a BSR; terminal device capability information; terminal device type information; a number of transmit and receive antennas of a terminal device; a number of transmission data streams supported by a terminal device; or CSI. ⟋ S110

FIG. 1

EP 4 586 682 A1

## Description

### CROSS-REFERENCE TO RELATED APPLICATION

This application is filed on the basis of Chinese patent application No. 202211521395.0 filed November 30, 2022, and claims priority to the Chinese patent application, the entire contents of which are incorporated herein by reference.

### TECHNICAL FIELD

Embodiments of the present disclosure relate to, but not limited to, the field of communication technologies, and more particularly, to an information transmission method, a communication device, and a storage medium.

### BACKGROUND

In the related technologies, a terminal device needs to establish a connection with a base station or an access point (AP), i.e., needs to be in a connected state before performing uplink information transmission. Because the terminal device in the connected state usually does not have a dedicated uplink transmission resource, the terminal device in the connected state needs to request an uplink transmission resource from the base station or the AP each time before transmitting information. It can be seen that, in order to implement an uplink information transmission, the terminal device needs to complete many operations in advance. As a result, the power consumption of the terminal device and the signaling overheads of the base station or the AP are increased. Therefore, how to realize the uplink information transmission of the terminal device while reducing the signaling overheads is an urgent problem to be solved.

### SUMMARY

Embodiments of the present disclosure provide an information transmission method, a communication device, and a storage medium, which can realize information transmission from a first communication node to a second communication node while reducing signaling overheads.

In accordance with a first aspect of the present disclosure, an embodiment provides an information transmission method, applied to a first communication node, the information transmission method including:
in an unconnected state, transmitting an information packet to a second communication node, where the information packet at least includes one of: a scheduling request (SR); a buffer status report (BSR); terminal device capability information; terminal device type information; a number of transmit and receive antennas of a terminal device; a number of transmission data streams supported by a terminal device; or channel state information (CSI).

In accordance with a second aspect of the present disclosure, an embodiment provides an information transmission method, applied to a second communication node, the information transmission method including:
receiving an information packet sent by a first communication node in an unconnected state, where the information packet at least includes one of: a scheduling request; a buffer status report; terminal device capability information; terminal device type information; a number of transmit and receive antennas of a terminal device; a number of transmission data streams supported by a terminal device; or CSI.

In accordance with a third aspect of the present disclosure, an embodiment provides a communication device, including: at least one processor; and at least one memory, configured for storing at least one program, where the at least one program, when executed by the at least one processor, causes the at least one processor to implement the information transmission method.

In accordance with a fourth aspect of the present disclosure, an embodiment provides a computer-readable storage medium, storing computer-executable instructions which, when executed by a processor, causes the processor to implement the information transmission method.

Embodiments of the present disclosure include: transmitting, by a first communication node in an unconnected state, an information packet to a second communication node, where the information packet at least includes one of: a scheduling request; a buffer status report; terminal device capability information; terminal device type information; a number of transmit and receive antennas of a terminal device; a number of transmission data streams supported by a terminal device; or CSI. In other words, the first communication node neither needs to establish a connection with the second communication node in advance, nor needs to request an uplink transmission resource from the second communication node, but instead, independently sends an information packet to initiate information transmission to the second communication node. As such, the information transmission operation of the first communication node can be simplified, thereby reducing the signaling overheads generated in the process of information transmission by the first communication node. Therefore, the embodiments of the present disclosure can realize information transmission from a first communication node to a second communication node while reducing signaling overheads.

## BRIEF DESCRIPTION OF DRAWINGS

FIG. 1 is a flowchart of an information transmission method according to an embodiment of the present disclosure;

FIG. 2 is a flowchart of a specific implementation of S110 in FIG. 1;

FIG. 3 is a flowchart of another specific implementation of S110 in FIG. 1;

FIG. 4 is a flowchart of an information transmission method according to another embodiment of the present disclosure;

FIG. 5 is a flowchart of a specific implementation of S410 in FIG. 4;

FIG. 6 is a flowchart of another specific implementation of S410 in FIG. 4;

FIG. 7 is a schematic diagram of two independent pilots according to an embodiment of the present disclosure;

FIG. 8 is a schematic diagram of w independent pilots according to an embodiment of the present disclosure;

FIG. 9 is a schematic diagram of a defined Physical Resource Block (PRB) according to an embodiment of the present disclosure;

FIG. 10 is a schematic diagram of a defined Demodulation Reference Signal (DMRS) according to an embodiment of the present disclosure;

FIG. 11 is a schematic diagram of distinguishing different reference signal ports by Orthogonal Cover Codes (OCC) according to an embodiment of the present disclosure;

FIG. 12 is a schematic diagram of a DMRS defined using an OCC according to an embodiment of the present disclosure;

FIG. 13 is another schematic diagram of a DMRS defined using an OCC according to an embodiment of the present disclosure;

FIG. 14 is another schematic diagram of a DMRS defined using an OCC according to an embodiment of the present disclosure;

FIG. 15 is a schematic diagram of a Physical Resource Block (PRB)-based transmission according to an embodiment of the present disclosure;

FIG. 16 is another schematic diagram of a defined DMRS according to an embodiment of the present disclosure;

FIG. 17 is another schematic diagram of a defined DMRS according to an embodiment of the present disclosure;

FIG. 18 is another schematic diagram of a defined DMRS according to an embodiment of the present disclosure;

FIG. 19 is a schematic diagram of a BPSK constellation according to an embodiment of the present disclosure;

FIG. 20 is a schematic diagram of a defined reference signal according to an embodiment of the present disclosure;

FIG. 21 is another schematic diagram of a defined reference signal according to an embodiment of the present disclosure;

FIG. 22 is another schematic diagram of a defined reference signal according to an embodiment of the present disclosure;

FIG. 23 is a schematic diagram of generating a DMRS port according to an embodiment of the present disclosure;

FIG. 24 is another schematic diagram of a defined reference signal according to an embodiment of the present disclosure;

FIG. 25 is another schematic diagram of a defined reference signal according to an embodiment of the present disclosure; and

FIG. 26 is a schematic structural diagram of a communication device according to an embodiment of the present disclosure.

## DETAILED DESCRIPTION

To make the objects, technical schemes, and advantages of the present disclosure clearer, the present disclosure is described in further detail in conjunction with accompanying drawings and embodiments. It should be understood that the specific embodiments described herein are merely used for illustrating the present disclosure, and are not intended to limit the present disclosure.

It should be noted that although a logical order is shown in the flowcharts, in some cases, the steps shown or described may be performed in an order different from that in the flowcharts. In the description, claims, and the description of the accompanying drawings, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first", "second" and the like, are merely used for distinguishing technical features, and are not intended to indicate or imply relative importance, or implicitly point out the number of the indicated technical features, or implicitly point out the order of the indicated technical features.

The present disclosure provides an information transmission method, a communication device, and a storage medium. The method includes: transmitting, by a first communication node in an unconnected state, an information packet to a second communication node, where the information packet at least includes one of: a scheduling request; a buffer status report; terminal device capability information; terminal device type information; a number of transmit and receive antennas of a terminal device; a number of transmission data streams supported by a terminal device; or CSI. In other words, the first communication node neither needs to establish a connection with the second communication node in advance, nor needs to request an uplink transmission resource from the second communication node, but instead, independently sends an information packet to initiate information transmission to the second communication node. As such, the information transmission operation of the first communication node can be simplified, thereby reducing the signaling overheads generated in the process of information transmission by the first communication node. Therefore, the embodiments of the present disclosure can realize information transmission from a first communication node to a second communication node while reducing signaling overheads.

The embodiments of the present disclosure will be further described in detail below in conjunction with the accompanying drawings.

In the related technologies, when a terminal device performs uplink information transmission or uplink data transmission, the terminal device (i.e., user equipment (UE)) needs to be in a connected state. The connected state may also be referred to as a Radio Resource Control (RRC) connected state. However, because the terminal device in the connected state usually does not have a dedicated uplink transmission resource, the terminal device in the connected state needs to request an uplink transmission resource from a system (a base station or an AP) each time before transmitting information. To achieve this object, the terminal device in the connected state sends a scheduling request (SR), a Buffer Status Report (BSR), and other information to the system each time before transmitting information. Only after obtaining an uplink resource grant from the system, the terminal device can transmit information on a time-frequency resource granted by the system. For better communication, the terminal device in the connected state also reports part or all of the following information to the system before transmitting information: terminal device capability information, terminal device type information, a number of transmit and receive antennas of the terminal device, a number of transmission data streams supported by the terminal device, and CSI. The CSI includes at least one of: a pre-coding matrix indication (PMI); a channel quality indicator (CQI); a rank indication (RI); a Synchronization Signal/Physical Broadcast Channel block (SSB) resource indicator (SSBRI); or a reference signal power. It can be seen that in order to implement an uplink information transmission, the terminal device needs to complete many operations in advance. As a result, the power consumption of the terminal device and the signaling overheads of the system are increased.

If the terminal device has not entered the connected state before performing the uplink information transmission, the terminal device needs to complete more operations in advance in order to implement the uplink information transmission. To save power, the terminal device is usually not always connected to the system when there is no service, i.e., the terminal device is not connected to (i.e., is disconnected from) the system, i.e., the terminal device is in an unconnected state (which may also be referred to as a non-connected state, non-RRC-connected state, connectionless state, connection-free state, or disconnected state, etc.). It can be understood that the idle state or inactive state may be regarded as being equivalent to the unconnected state, or the idle state or inactive state may be regarded as a type of unconnected state.

When the terminal device is in the unconnected state (i.e., has not entered the connected state or has not established a connection with the system), the terminal device, if using an uplink information transmission scheme in the related technologies, needs to establish a connection with the system before transmitting information. The terminal device can further request an uplink transmission resource from the system (such as a base station or an AP) only after entering the connected state (or referred to as an active state), and can perform a real information transmission process only after obtaining a resource grant from the system. The terminal device needs to perform a random access process to enter the connected state from the unconnected state. The random access process requires multiple interaction processes between the terminal device and the base station. For example, the random access process includes the following interaction processes that: the terminal device sends a preamble, i.e., Message1; the base station returns a random access response (RAR), i.e., Message2; the terminal device sends Layer 2 (L2) or Layer 3 (L3) control information, i.e., Message3; and the base station sends Message4. The random access process inevitably increases the power consumption of the terminal device during each information transmission.

Further, if the uplink information transmission scheme in the related technologies is used, when there are a large number of terminal devices needing to transmit information and the large number of terminal devices all need to enter the connected state before transmitting the information, the large number of terminal devices need to perform the random access process. This increases the probability of collision or congestion in the random access process. As a result, most terminal devices need to perform random access multiple times in order to successfully enter the connected state. Consequently, the terminal devices consume more energy in order to complete the task of information transmission, and the transmission delay is also increased significantly.

In view of the above problems, the present disclosure provides an information transmission method for a terminal device in an unconnected state.

In order to allow the terminal device to transmit data or information with as little power as possible and reduce the signaling overheads of the system, it is desirable that the terminal device is always in the unconnected state, i.e., the idle state or inactive state, when there is no transmission task, such that the terminal device can be in a deep sleep state and turn off all circuits related to transmission. When there is data or information to be sent, the terminal device in the unconnected state (i.e., idle state or inactive state) can independently directly initiate an information transmission, and neither needs to establish a connection with the system in advance, nor needs to request the base station or the AP to allocate an uplink transmission resource, i.e., does not need to obtain an uplink transmission resource grant or scheduling. As such, the information transmission of the terminal device in the unconnected state can be simplified, which is conducive to improving the spectral efficiency of the system and reducing the power consumption of the terminal device.

Based on the above analysis, the terminal device in the unconnected state can independently determine a time point at which the information is to be transmitted, and then directly transmit the information without notifying the base station, AP, or system, or requesting a transmission resource from the base station, AP, or system before transmitting the information. This also means that the base station, AP, or system does not need to allocate a special time-frequency resource for the information transmission of each terminal device, i.e., does not need to allocate different time-frequency resources for the information transmission of each terminal device. The base station, AP, or system only needs to configure a common channel through, for example, broadcast information, and notify all terminal devices to transmit information on the common channel. However, because the information transmission is initiated by the terminal device independently, the base station cannot control the operating terminal devices and the number of terminal devices in each information transmission process, and the base station only needs to detect and decode the information transmitted by each terminal device from signals received.

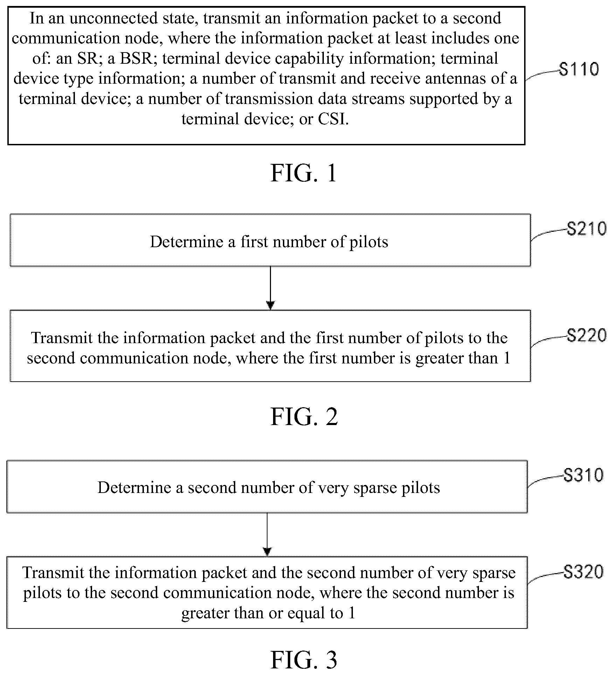

FIG. 1 is a flowchart of an information transmission method according to an embodiment of the present disclosure. The information transmission method is applied to a first communication node. The information transmission method may include, but not limited to, a following step S110.

At S110, in an unconnected state, an information packet is transmitted to a second communication node, where the information packet at least includes one of: a scheduling request; a buffer status report; terminal device capability information; terminal device type information; a number of transmit and receive antennas of a terminal device; a number of transmission data streams supported by a terminal device; or CSI.

In a feasible implementation, the information packet may further include terminal device identification information. The specific content of the terminal device identification information is not limited in the embodiments of the present disclosure. The terminal device identification information may be a Media Access Control (MAC) address, an Internet Protocol (IP) address, a port number, a Service Set Identifier (SSID), a device code, or other information that can uniquely identify a wireless communication device, etc. The device code may be an International Mobile Equipment Identity (IMEI), a Mobile Equipment Identifier (MEID), or the like, which is not particularly limited herein.

In a feasible implementation, when the information packet includes the CSI, the CSI includes at least one of: a pre-coding matrix indication; a channel quality indicator (CQI); a rank indication (RI); a Synchronization Signal/Physical Broadcast Channel block (SSB) resource indicator (SSBRI); or a reference signal power, which is not limited herein.

In a feasible implementation, in the unconnected state, in order to increase the information transmission efficiency of the first communication node and the second communication node, the information packet includes a scheduling request and a buffer status report, and may further include at least one of terminal device capability information, terminal device type information, a number of transmit and receive antennas of a terminal device, a number of transmission data streams supported by a terminal device, or CSI. The terminal device capability information can enable the AP and the terminal device to perform an information transmission matching a capability of the terminal device. The terminal device type information can enable the base station or the AP and the terminal device to perform an information transmission matching the type of the terminal device. The terminal device capability information, the terminal device type information, the number of transmit and receive antennas of the terminal device, the number of transmission data streams supported by the terminal device, and the CSI can enable the AP to better implement scheduling, resource allocation, power allocation, beam management, handover management, paging, and mobility management.

In a feasible implementation, the CSI includes at least one of: a pre-coding matrix indication (PMI); a channel quality indicator (CQI); a rank indication (RI); a Synchronization Signal/Physical Broadcast Channel block (SSB) resource indicator (SSBRI); or a reference signal power (RSRP). Pre-coding in the pre-coding matrix indication is information required by a transmit end in a multi-antenna system to preprocess a signal to be transmitted, and is usually in the form of a matrix. In a Multiple Input Multiple Output (MIMO) system, the receive end and the transmit end respectively store a codebook including several pre-coding matrices. As such, the receive end may select a target pre-coding matrix from the codebook according to an estimated channel matrix and a preset rule, and feed back an index value of the target pre-coding matrix and quantized CSI (i.e., channel state quantization information) to the transmit end. At the next moment, the transmit end adopts a new pre-coding matrix and determines a coding and modulation scheme for a codeword according to the channel state quantization information fed back by the receive end. The channel quality indicator refers to an index value of corresponding channel quality in a case where certain performance is satisfied, e.g., the Block Error Rate (BLER) is 10%. The index value includes information such as a current modulation scheme, coding rate, and efficiency of a channel. Generally, a larger index of CQI indicates higher coding efficiency. Rank in the rank indication refers to a rank in an antenna matrix in a MIMO scheme, and represents the number of valid data streams in parallel. The SSB resource indicator may indicate a beam index and may be used for beam management. An SSB refers to a synchronization signal and PBCH block, and the SSB includes three parts: a primary synchronization signal (PSS), a secondary synchronization signal (SSS), and a PBCH block. The reference signal receiving power (RSRP) may indicate signal strength. For example, L1-RSRP may indicate beam strength.

In this embodiment, by the information transmission method including S110, a first communication node in an unconnected state transmits an information packet to a second communication node, where the information packet at least includes one of: a scheduling request; a buffer status report; terminal device capability information; terminal device type information; a number of transmit and receive antennas of a terminal device; a number of transmission data streams supported by a terminal device; or CSI. In other words, the first communication node neither needs to establish a connection with the second communication node in advance, nor needs to request an uplink transmission resource from the second communication node, but instead, independently sends an information packet to initiate information transmission to the second communication node. As such, the information transmission operation of the first communication node can be simplified, thereby reducing the signaling overheads generated in the process of information transmission by the first communication node. Therefore, this embodiment can realize information transmission from a first communication node to a second communication node while reducing signaling overheads.

However, when performing transmission in the unconnected transmission state, the terminal device independently selects a pilot or reference signal from a pilot set, so different terminal devices may select the same reference signal, resulting in reference signal collision. When the number of pilots or the number of reference signals is limited and the terminal devices have a high load, the probability of collision between pilots or reference signals independently selected by different terminal devices is very high. Once reference signal collision occurs, it is difficult for the base station or the AP to separate different terminal devices suffering from reference signal collision according to the reference signals.

In view of the above problems, the present disclosure provides a method of using multiple pilots to support information transmission between the first communication node in the unconnected state and the second communication node.

Based on the above analysis, in an embodiment, as shown in FIG. 2, S110 is further described. S110 may include, but not limited to, the following steps S210 and S220.

At S210, a first number of pilots are determined.

At S220, the information packet and the first number of pilots are transmitted to the second communication node, where the first number is greater than 1.

It can be understood that the pilot may be referred to as a pilot signal, or a reference signal (RS), or a DMRS, or a preamble. The pilot is usually in the form of a sequence or a string of symbols, so the pilot is also referred to as a pilot sequence. Therefore, the plurality of pilots may be two or more pilot sequences, which is not particularly limited herein.

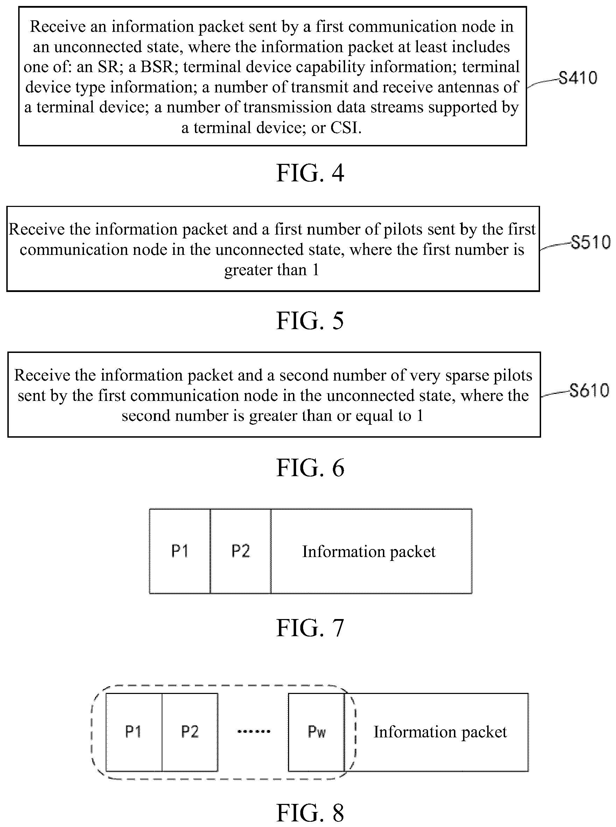

In a feasible implementation, the first number of pilots are independent of each other, i.e., the first number of pilots are not associated or correlated with each other. FIG. 7 is a schematic diagram of two independent pilots (i.e., pilot P1 and pilot P2). FIG. 8 is a schematic diagram of w independent pilots according to an embodiment of the present disclosure, where the w independent pilots are respectively denoted as P1, P2, ..., Pw, and w may be a positive integer greater than 2, which is not particularly limited herein.

In this embodiment, when the first communication node sends two or more pilots to the second communication node at a time, and the pilots are independent of each other (i.e., the pilots are referred to as independent pilots), i.e., the information transmission between the first communication node and the second communication node adopts an independent multi-pilot technology, the second communication node may determine target information corresponding to the first communication node according to the pilots that do not collide, then determine a plurality of pilots of the first communication node according to the target information, and eliminate all the pilots of the first communication node. This can reduce the interference on pilots of users that have not been demodulated, and further increase the load of the system. In other words, under the same pilot overheads, the probability that the independent pilots of different first communication nodes collide is smaller than the probability of collision of a conventional single-pilot scheme. Therefore, the embodiments of the present disclosure support the access of more first communication nodes in the target state in which the first communication nodes have not established a data connection with the second communication node.

In a feasible implementation, the first number of pilots are independent of each other, i.e., the first number of pilots are not associated or correlated with each other. A technology in which two or more pilots are included in one transmission and the pilots are not associated with each other or are independent of each other is referred to as an independent multi-pilot technology, where the plurality of pilots independent of each other are referred to as multiple independent pilots. As shown in FIG. 8, w pilots are included in one transmission, where the w pilots are respectively denoted as P1, P2, ..., Pw, and w is a positive integer greater than 2. A data packet contains information of the w pilots. For example, the data packet contains index numbers of the w pilots (i.e., index numbers of the pilots in a first preset pilot set). As such, once a data packet of a terminal device (first communication node) is successfully decoded, information of all pilots used by the terminal device in this information transmission can be determined, and all the pilots used by the terminal device in this information transmission can be reconstructed, such that interference cancellation can be performed on the pilot signals. In an embodiment, the first number of pilots may be determined according to information in the information packet. The information in the information packet may include at least one of: a scheduling request; a buffer status report; terminal device capability information; terminal device type information; a number of transmit and receive antennas of a terminal device; a number of transmission data streams supported by a terminal device; or CSI.

In another embodiment, the first number of pilots may be determined according to one or more pieces of bit information in the information packet. For example, one pilot may be determined according to one piece of bit information in the information packet. For another example, one pilot may be determined according to two pieces of bit information in the information packet. For another example, two pilots are determined according to one piece of bit information in the information packet. The first number and the number of pieces of bit information are not limited in the embodiments of the present disclosure.

In another embodiment, each of the pilots is determined from a first preset pilot set according to a seventh number of pieces of bit information in the information packet, where the first preset pilot set includes an eighth number of pilots, the seventh number and the eighth number are correlated by a logarithmic function, and the logarithmic function is a logarithmic function with a base of 2. For example, if the eighth number is defined as D, the seventh number is $\log_2(D)$, which is not particularly limited herein. It can be understood that the eighth number may be 64, 128, or more, which is not particularly limited herein.

In an embodiment, when the second communication node is a base station, the base station may determine, by using iterative receivers in each iteration, the target information corresponding to the first communication node according to a plurality of pilots that do not collide, then reconstruct the target information and the pilots, and eliminate from signals received by the base station. The base station iteratively performs the operations, until the target information corresponding to all the first communication nodes is determined.

It should be noted that in a transmission scenario where there is no connection between the first communication nodes and the second communication node or a scheduling-free transmission scenario, i.e., when the first communication nodes are in the unconnected state, uplink transmission resources (such as reference signals or pilots) are also independently selected by the first communication nodes, so different first communication nodes may select the same uplink transmission resource, leading to resource collision. When the number of first communication nodes is large (i.e., in the case of high overload), the probability of resource collision is very high. Once resource collision occurs, the second communication node cannot use the uplink transmission resources to separate the first communication nodes that select the same uplink transmission resource. In order to reduce pilot collision and estimate a channel and a time-frequency offset, pilot resources need to be increased manyfold, i.e., the length of the pilot sequence is increased manyfold, and the detection complexity is increased exponentially. In the embodiments of the present disclosure, the target information may be determined according to the plurality of pilots that do not collide, so as to reduce the probability of pilot collision and further increase the number of accessing first communication nodes.

In order to reduce pilot collision, more pilots need to be determined, i.e., the number of pilots in the preset pilot set should be as large as possible. An increase in the number of pilots indicates an increase in pilot overheads. In addition, if a conventional pilot technology is used, channel estimation and time offset or frequency offset estimation need to be performed based on the pilots, to implement correlation demodulation of data symbols in the target information. Therefore, each pilot needs to occupy enough resources, i.e., each pilot should not be distributed too sparsely over the entire transmission bandwidth and at all time, in order to estimate channel information of the entire transmission bandwidth and time-frequency offset information in the transmission time. Therefore, if a conventional pilot scheme is used to ensure the transmission performance when the first communication node is in the target state in which the first communication node has not established a data connection with the second communication node, pilot overheads will be increased manyfold, and the detection complexity will also be increased significantly.

A sparse pilot refers to a pilot that is sparsely distributed over the entire transmission bandwidth and at all time. Each sparse pilot may occupy little overhead. Therefore, the number of pilots can be significantly increased without increasing pilot resource overheads, thereby significantly reducing the probability of pilot collision. A very sparse pilot refers to a pilot that is most sparsely distributed over the entire transmission bandwidth and at all time. Overheads occupied by each very sparse pilot can be minimized. Therefore, the number of pilots can be maximized without increasing pilot resource overheads, thereby minimizing the probability of pilot collision. When the information transmission between the first communication node and the second communication node adopts a sparse pilot scheme, the second communication node may estimate part of information of a wireless channel according to a sparse pilot, and does not need to estimate all the information of the wireless channel according to the pilot. Moreover, the base station or the AP may further extract channel information from data symbols, to alleviate the load of the sparse pilot. In view of the above problems, the present disclosure provides a method of using very sparse pilots to support information transmission between the first communication node in the unconnected state and the second communication node.

Based on the above analysis, in an embodiment, as shown in FIG. 3, S110 is further described. S110 may include, but not limited to, the following steps S310 and S320.

At S310, a second number of very sparse pilots are determined.

At S320, the information packet and the second number of very sparse pilots are transmitted to the second communication node, where the second number is greater than or equal to 1.

In a feasible implementation, each of the very sparse pilots includes a third number of non-zero-valued symbols, where the third number is greater than 0 and less than 5. The third number of non-zero-valued symbols are carried on a fourth number of resource elements (REs) adjacent in time domain and frequency domain, or on a fourth number of symbols in chronological order, or on a fourth number of REs on subcarriers adjacent in frequency domain. The third number is equal to the fourth number (i.e., the fourth number is greater than 0 and less than 5). It can be understood that each very sparse pilot has only one Reference Signal Element (RSE), and the number of non-zero-valued symbols included in this reference signal element is the third number. For OFDM, one RE may carry one symbol. Further, if the third number of non-zero-valued symbols are carried on adjacent REs, it is equivalent to that the third number of symbols are carried on adjacent time-frequency resources. Alternatively, for OFDM, if the third number of non-zero-valued symbols are carried on adjacent time-frequency resources, it is equivalent to that the third number of non-zero-valued symbols are carried on adjacent REs.

In a feasible implementation, a value of the third number is 1, and a value of the non-zero-valued symbol is 1, i.e., there is one non-zero-valued symbol having a value of 1; or a value of the third number is 2, the third number of non-zero-valued symbols constitute a non-zero-valued symbol pair $[p1,p2]$, and a value of $[p1,p2]$ is $[a1,a2]$ or $[b1,b2]$, where $[a1,a2]$ and $[b1,b2]$ are orthogonal, i.e., $a1'*b1 + a2'*b2 = 0$, where $a1'$ and $a2'$ are respectively conjugates of complex numbers $a1$ and $a2$; or a value of the third number is 2, the third number of non-zero-valued symbols constitute a non-zero-valued symbol pair $[p1,p2]$, and a value of $[p1, p2]$ at least includes the following cases: $[p1,p2] = [1,1]$; $[p1,p2] = [1,-1]$; $[p1,p2] = [1,j]$; $[p1,p2] = [1,-j]$; or a value of the third number is 4, the third number of non-zero-valued symbols constitute a non-zero-valued symbol group $[p1,p2,p3,p4]$, and a value of $[p1,p2,p3,p4]$ is $[a1,a2,a3,a4]$, $[b1,b2,b3,b4]$, $[c1,c2,c3,c4]$, or $[d1,d2,d3,d4]$, where $[a1,a2,a3,a4]$, $[b1,b2,b3,b4]$, $[c1,c2,c3,c4]$, and $[d1,d2,d3,d4]$ are orthogonal, i.e., any two of $[a1,a2,a3,a4]$, $[b1,b2,b3,b4]$, $[c1,c2,c3,c4]$, and $[d1,d2,d3,d4]$ are orthogonal, for example when $[a1,a2,a3,a4]$ and $[b1,b2,b3,b4]$ are orthogonal, $a1'*b1 + a2'*b2 + a3'*b3 + a4'*b4 = 0$, and when $[a1,a2,a3,a4]$ and $[c1,c2,c3,c4]$ are orthogonal, $a1'*c1 + a2'*c2 + a3'*c3 + a4'*c4 = 0$, etc., which will not be described in detail herein; or a value of the third number is 4, the third number of non-zero-valued symbols constitute a non-zero-valued symbol group $[p1,p2,p3,p4]$, and a value of $[p1,p2,p3,p4]$ at least includes cases in Table 1 below. Different sequence numbers in Table 1 correspond to different cases.

Table 1

| No. | $p1$ | $p2$ | $p3$ | $p4$ | No. | $p1$ | $p2$ | $p3$ | $p4$ |
|---|---|---|---|---|---|---|---|---|---|
| 1 | 1 | 1 | 1 | 1 | 33 | 1 | 1 | 1 | $j$ |
| 2 | 1 | 1 | -1 | -1 | 34 | 1 | 1 | -1 | $-j$ |
| 3 | 1 | -1 | 1 | -1 | 35 | 1 | -1 | 1 | $-j$ |
| 4 | 1 | -1 | -1 | 1 | 36 | 1 | -1 | -1 | $j$ |
| 5 | 1 | 1 | $j$ | $-j$ | 37 | 1 | 1 | $j$ | 1 |
| 6 | 1 | 1 | $-j$ | $j$ | 38 | 1 | 1 | $-j$ | -1 |
| 7 | 1 | -1 | $j$ | $j$ | 39 | 1 | -1 | $j$ | -1 |
| 8 | 1 | -1 | $-j$ | $-j$ | 40 | 1 | -1 | $-j$ | 1 |
| 9 | 1 | $j$ | 1 | $-j$ | 41 | 1 | $j$ | 1 | 1 |
| 10 | 1 | $j$ | -1 | $j$ | 42 | 1 | $j$ | -1 | -1 |
| 11 | 1 | $-j$ | 1 | $j$ | 43 | 1 | $-j$ | 1 | -1 |
| 12 | 1 | $-j$ | -1 | $-j$ | 44 | 1 | $-j$ | -1 | 1 |
| 13 | 1 | $j$ | $j$ | -1 | 45 | 1 | $j$ | $j$ | $-j$ |
| 14 | 1 | $j$ | $-j$ | 1 | 46 | 1 | $j$ | $-j$ | $j$ |
| 15 | 1 | $-j$ | $j$ | 1 | 47 | 1 | $-j$ | $j$ | $j$ |
| 16 | 1 | $-j$ | $-j$ | -1 | 48 | 1 | $-j$ | $-j$ | $-j$ |
| 17 | 1 | 1 | 1 | -1 | 49 | 1 | 1 | 1 | $-j$ |
| 18 | 1 | 1 | -1 | 1 | 50 | 1 | 1 | -1 | $j$ |
| 19 | 1 | -1 | 1 | 1 | 51 | 1 | -1 | 1 | $j$ |
| 20 | 1 | -1 | -1 | -1 | 52 | 1 | -1 | -1 | $-j$ |
| 21 | 1 | 1 | $j$ | $j$ | 53 | 1 | 1 | $j$ | -1 |
| 22 | 1 | 1 | $-j$ | $-j$ | 54 | 1 | 1 | $-j$ | 1 |
| 23 | 1 | -1 | $j$ | $-j$ | 55 | 1 | -1 | $j$ | 1 |
| 24 | 1 | -1 | $-j$ | $j$ | 56 | 1 | -1 | $-j$ | -1 |
| 25 | 1 | $j$ | 1 | $j$ | 57 | 1 | $j$ | 1 | -1 |
| 26 | 1 | $j$ | -1 | $-j$ | 58 | 1 | $j$ | -1 | 1 |
| 27 | 1 | $-j$ | 1 | $-j$ | 59 | 1 | $-j$ | 1 | 1 |
| 28 | 1 | $-j$ | -1 | $j$ | 60 | 1 | $-j$ | -1 | -1 |
| 29 | 1 | $j$ | $j$ | 1 | 61 | 1 | $j$ | $j$ | $j$ |
| 30 | 1 | $j$ | $-j$ | -1 | 62 | 1 | $j$ | $-j$ | $-j$ |
| 31 | 1 | $-j$ | $j$ | -1 | 63 | 1 | $-j$ | $j$ | $-j$ |
| 32 | 1 | $-j$ | $-j$ | 1 | 64 | 1 | $-j$ | $-j$ | $j$ |

In a feasible implementation, a symbol length of each of the very sparse pilots is greater than 24, i.e., the total number of non-zero-valued symbols and zero-valued symbols of each very sparse pilot is greater than 24, which is not particularly limited herein.

In a feasible implementation, a value of the second number may be greater than or equal to 1, i.e., the value of the second number may be 1, 2, or other values, which is not particularly limited herein.

In a feasible implementation, when a value of the second number is greater than or equal to 2, the second number of very sparse pilots are independent of each other, i.e., the second number of very sparse pilots are not associated or correlated with each other. A technology in which two or more pilots are included in one transmission and the pilots are not associated with each other or are independent of each other is referred to as an independent multi-pilot technology, where the pilots independent of each other are referred to as multiple independent pilots. As shown in FIG. 8, w very sparse pilots are included in one transmission. The w very sparse pilots are respectively denoted as P1, P2, ..., Pw, and w is a positive integer greater than 2. A data packet contains information of the w very sparse pilots. For example, the data packet contains index numbers of the w very sparse pilots (i.e., index numbers of the very sparse pilots in a preset pilot set). As such, once a data packet of a terminal device is successfully decoded, information of all very sparse pilots used by the terminal device in this information transmission can be determined, such that interference cancellation can be performed on the pilot signals, to improve the demodulation performance of the subsequent demodulation of terminal devices.

It can be understood that the very sparse pilot scheme can significantly increase the number of pilots without increasing pilot resource overheads, thereby significantly reducing the probability of pilot collision. When the information transmission between the first communication node and the second communication node adopts a sparse pilot scheme, the second communication node may estimate part of information of a wireless channel according to a sparse pilot, and does not need to estimate all the information of the wireless channel according to the very sparse pilot. Moreover, the base station or the AP may further extract channel information from data symbols, to alleviate the load of the sparse pilot.

Further, the independent multi-pilot technology and the very sparse pilot technology may be used in combination, i.e., a plurality of very sparse pilots independent of each other may be used, to further reduce the probability of pilot collision and further increase the number of first communication nodes connected at the same time.

In an embodiment, when the second communication node is a base station, the base station may demodulate, by using iterative receivers in each iteration, a corresponding first communication node according to very sparse pilots that do not collide, then reconstruct a data packet and very sparse pilots of the first communication node, and eliminate the data packet and the very sparse pilots corresponding to the first communication node from signals received. The base station iteratively performs the operations, until all the solvable first communication nodes are demodulated. The very sparse pilots independent of each other can reduce the probability of collision of pilots corresponding to different terminal devices, and can increase the number of first communication nodes connected at the same time.

In an embodiment, when the value of the second number is greater than or equal to 2, the second number of very sparse pilots may be determined according to information in the information packet.

In another embodiment, when the value of the second number is greater than or equal to 2, the second number of very sparse pilots may be determined based on one or more pieces of bit information in the information packet. For example, one very sparse pilot may be determined according to one piece of bit information in the information packet. For another example, one very sparse pilot may be determined according to a plurality of pieces of bit information in the information packet. For another example, two very sparse pilots are determined according to a plurality of pieces of bit information in the information packet. The second number and the number of pieces of bit information are not limited in the embodiments of the present disclosure.

In another embodiment, each of the very sparse pilots is determined from a second preset pilot set according to a fifth number of pieces of bit information in the information packet, where the second preset pilot set includes a sixth number of pilots, the fifth number and the sixth number are correlated by a logarithmic function, and the logarithmic function is a logarithmic function with a base of 2. For example, if the sixth number is defined as D, the fifth number is $\log_2(D)$, which is not particularly limited herein. It can be understood that the sixth number may be 64, 128, or more, which is not particularly limited herein.

In addition, FIG. 4 shows an information transmission method according to another embodiment of the present disclosure. The information transmission method is applied to a second communication node. The information transmission method may include, but not limited to, a following step S410.

At S410, an information packet sent by a first communication node in an unconnected state is received, where the information packet at least includes one of: a scheduling request; a buffer status report; terminal device capability information; terminal device type information; a number of transmit and receive antennas of a terminal device; a number of transmission data streams supported by a terminal device; or CSI.

In a feasible implementation, the information packet received by the second communication node may further include terminal device identification information. The specific content of the terminal device identification information is not limited in the embodiments of the present disclosure. The terminal device identification information may be a Media Access Control (MAC) address, an Internet Protocol (IP) address, a port number, a Service Set Identifier (SSID), a device code, or other information that can uniquely identify a wireless communication device, etc. The device code may be an International Mobile Equipment Identity (IMEI), a Mobile Equipment Identifier (MEID), or the like, which is not particularly limited herein.

In a feasible implementation, when the information packet includes the CSI, the CSI includes at least one of: a pre-coding matrix indication; a channel quality indicator (CQI); a rank indication (RI); a Synchronization Signal/Physical Broadcast Channel block (SSB) resource indicator (SSBRI); or a reference signal power, which is not limited herein.

In a feasible implementation, in the unconnected state, in order to increase the information transmission efficiency of the first communication node and the second communication node, the information packet includes a scheduling request and a buffer status report, and may further include at least one of terminal device capability information,

terminal device type information, a number of transmit and receive antennas of a terminal device, a number of transmission data streams supported by a terminal device, or CSI. The terminal device capability information can enable the base station or the AP and the terminal device to perform an information transmission matching a capability of the terminal device. The terminal device type information can enable the base station or the AP and the terminal device to perform an information transmission matching the type of the terminal device. The terminal device capability information, the terminal device type information, the number of transmit and receive antennas of the terminal device, the number of transmission data streams supported by the terminal device, and the CSI can enable the system (i.e., the base station or the AP and the terminal device) to better implement scheduling, resource allocation, power allocation, beam allocation, handover management, paging, and mobility management.

In this embodiment, by the information transmission method including S410, an information packet sent by a first communication node in an unconnected state is received, where the information packet at least includes one of: an SR; a BSR; terminal device capability information; terminal device type information; a number of transmit and receive antennas of a terminal device; a number of transmission data streams supported by a terminal device; or CSI. In other words, the first communication node neither needs to establish a connection with the second communication node in advance, nor needs to request an uplink transmission resource from the second communication node, but instead, independently sends an information packet to initiate information transmission to the second communication node. As such, the information transmission operation of the first communication node can be simplified. The first communication node does not need to perform a series of interactive response processes with the second communication node before performing the information transmission, such that signaling overheads caused by the interactive response processes are avoided. Therefore, the embodiments of the present disclosure can realize information transmission from a first communication node to a second communication node while reducing signaling overheads.

For the principle of the specific steps and method of this embodiment, reference may be made to the description of the embodiment shown in FIG. 1, and the details will not be described herein again. The difference between this embodiment and the embodiment shown in FIG. 1 lies in that the steps of the embodiment shown in FIG. 1 are executed by a transmit end of the information packet, i.e., the first communication node, and the steps in this embodiment are executed by a receive end of the information packet, i.e., the second communication node.

In addition, in an embodiment, as shown in FIG. 5, S410 is further described, and S410 may include, but not limited to, a following step S510.

At S510, the information packet and a first number of pilots sent by the first communication node in the unconnected state are received, where the first number is greater than 1.

In a feasible implementation, the first number of pilots are independent of each other, i.e., the first number of pilots are not associated or correlated with each other. FIG. 7 is a schematic diagram of two independent pilots (i.e., pilot P1 and pilot P2). FIG. 8 is a schematic diagram of w independent pilots according to an embodiment of the present disclosure, where the w independent pilots are respectively denoted as P1, P2, ..., Pw, and w may be a positive integer greater than 2, which is not particularly limited herein.

In this embodiment, when the second communication node receives two or more pilots that are sent by the first communication node at a time, and the pilots are independent of each other (i.e., the pilots are referred to as multiple independent pilots), i.e., the information transmission between the first communication node and the second communication node adopts an independent multi-pilot technology, when the second communication node receives two or more pilots that are sent by the first communication node at a time, and the pilots are independent of each other (i.e., the pilots are referred to as multiple independent pilots), the second communication node can determine target information corresponding to the first communication node according to the pilots that do not collide, then determine a plurality of pilots of the first communication node according to the target information, and eliminate all the pilots of the first communication node. This can reduce the interference on pilots of user terminal devices that have not been demodulated, and further increase the load of the second communication node. In other words, under the same pilot overheads, the probability that the multiple independent pilots of different first communication nodes collide is smaller than the probability of collision of a conventional single-pilot scheme. Therefore, the embodiments of the present disclosure support the access of more first communication nodes in the target state in which the first communication nodes have not established a data connection with the second communication node.

In a feasible implementation, the first number of pilots are independent of each other, i.e., the first number of pilots are not associated or correlated with each other. A technology in which two or more pilots are included in one transmission and the pilots are not associated with each other or are independent of each other is referred to as an independent multi-pilot technology, where the pilots independent of each other are referred to as multiple independent pilots. As shown in FIG. 8, w pilots are included in one transmission. The w pilots are respectively denoted as P1, P2, ..., Pw, and w is a positive integer greater than 2. A data packet contains information of the w pilots. For example, the data packet contains index numbers of the w pilots (i.e., index numbers of the pilots in a preset pilot set). As such, once a data packet of a terminal device is successfully decoded, information of all pilots used by the terminal device in this information transmission can be determined, such that interference cancellation can be performed on the pilot signals.

It can be understood that the very sparse pilot scheme can significantly increase the number of pilots without increasing pilot resource overheads, thereby significantly reducing the probability of pilot collision. When the information transmission between the first communication node and the second communication node adopts a sparse pilot scheme, the second communication node may estimate part of information of a wireless channel according to a sparse pilot, and does not need to estimate all the information of the wireless channel according to the pilot. Moreover, the base station or the AP may further extract channel information from data symbols, to alleviate the load of the sparse pilot.

In an embodiment, the first number of pilots may be determined according to information in the information packet. The information in the information packet may include at least one of: a scheduling request; a buffer status report; terminal device capability information; terminal device type information; a number of transmit and receive antennas of a terminal device; a number of transmission data streams supported by a terminal device; or CSI.

In another embodiment, the first number of pilots may be determined according to one or more pieces of bit information in the information packet. For example, one pilot may be determined according to one piece of bit information in the information packet. For another example, one pilot may be determined according to two pieces of bit information in the information packet. For another example, two pilots are determined according to one piece of bit information in the information packet. The first number and the number of pieces of bit information are not limited in the embodiments of the present disclosure.

In another embodiment, each of the pilots is determined from a first preset pilot set according to a seventh number of pieces of bit information in the information packet, where the first preset pilot set includes an eighth number of pilots, the seventh number and the eighth number are correlated by a logarithmic function, and the logarithmic function is a logarithmic function with a base of 2. For example, if the eighth number is defined as D, the seventh number is $\log_2(D)$, which is not particularly limited herein. It can be understood that the eighth number may be 64, 128, or more, which is not particularly limited herein.

In an embodiment, when the second communication node is a base station, the base station may determine, by using iterative receivers in each iteration, the target information corresponding to the first communication node according to a plurality of pilots that do not collide, then reconstruct the target information and the pilots, and eliminate from signals received by the base station. The base station iteratively performs the operations, until the target information corresponding to all the first communication nodes is determined.

For the principle of the specific steps and method of this embodiment, reference may be made to the description of the embodiment shown in FIG. 2, and the details will not be described herein again. The difference between this embodiment and the embodiment shown in FIG. 2 lies in that the steps of the embodiment shown in FIG. 2 are executed by a transmit end of the information packet, i.e., the first communication node, and the steps in this embodiment are executed by a receive end of the information packet, i.e., the second communication node.

In addition, in an embodiment, as shown in FIG. 6, S410 is further described, and S410 may include, but not limited to, a following step S610.

At S610, the information packet and a second number of very sparse pilots sent by the first communication node in the unconnected state are received, where the second number is greater than or equal to 1.

In a feasible implementation, each of the very sparse pilots includes a third number of non-zero-valued symbols, where the third number is greater than 0 and less than 5. The third number of non-zero-valued symbols are carried on a fourth number of Resource Elements (REs) adjacent in time domain and frequency domain, or on a fourth number of symbols in chronological order, or on a fourth number of REs on subcarriers adjacent in frequency domain. The third number is equal to the fourth number (i.e., the fourth number is greater than 0 and less than 5). It can be understood that each very sparse pilot has only one Reference Signal Element (RSE), and the number of symbols of non-zero-valued symbols included in this reference signal element is the third number. It can be understood that for OFDM, one RE may carry one symbol. Further, if the third number of non-zero-valued symbols are carried on adjacent REs, it is equivalent to that the third number of symbols are carried on adjacent time-frequency resources. Alternatively, for OFDM, if the third number of non-zero-valued symbols are carried on adjacent time-frequency resources, it is equivalent to that the third number of non-zero-valued symbols are carried on adjacent REs.

In a feasible implementation, a value of the third number is 1, and a value of the non-zero-valued symbol is 1, i.e., there is one non-zero-valued symbol having a value of 1; or a value of the third number is 2, the third number of non-zero-valued symbols constitute a non-zero-valued symbol pair [p1,p2], and a value of [p1,p2] is [a1,a2] or [b1, b2], where [a1,a2] and [b1,b2] are orthogonal, i.e., $a1' * b1 + a2' * b2 = 0$, and $a1'$ and $a2'$ are respectively conjugates of complex numbers $a1$ and $a2$; or a value of the third number is 2, the third number of non-zero-valued symbols constitute a non-zero-valued symbol pair [p1,p2], and a value of [p1,p2] at least includes the following cases: [p1,p2] = [1,1]; [p1,p2] = [1,-1]; [p1,p2] = [1,j]; [p1,p2] = [1,-j]; or a value of the third number is 4, the third number of non-zero-valued symbols constitute a non-zero-valued symbol group [p1, p2, p3, p4], and a value of [p1,p2,p3,p4] is [a1,a2,a3,a4], [b1,b2,b3,b4], [c1,c2,c3,c4], or [d1,d2,d3,d4], where [a1,a2,a3,a4] , [b1,b2,b3,b4], [c1,c2,c3,c4], and [d1,d2,d3,d4] are orthogonal, i.e., any two of [a1,a2, a3,a4], [b1,b2,b3,b4], [c1,c2,c3,c4], and [d1,d2,d3,d4] are orthogonal, for example when [a1,a2,a3,a4] and [b1,b2,b3,b4] are orthogonal, $a1' * b1 + a2' * b2 + a3' * b3 + a4' * b4 = 0$, and when [a1,a2,a3,a4] and [c1,c2,c3,c4] are orthogonal, $a1' * c1$

+ $a2'*c2 + a3'*c3 + a4'*c4 = 0$, etc., which will not be described in detail herein; or a value of the third number is 4, the third number of non-zero-valued symbols constitute a non-zero-valued symbol group *[p1, p2, p3, p4]*, and a value of *[p1, p2, p3, p4]* at least includes cases in Table 1 above.

In a feasible implementation, a symbol length of each of the very sparse pilots is greater than 24, i.e., the total number of non-zero-valued symbols and zero-valued symbols of each very sparse pilot is greater than 24, which is not particularly limited herein.

In a feasible implementation, a value of the second number may be greater than or equal to 1, i.e., the value of the second number may be 1, 2, or other values, which is not particularly limited herein.

In a feasible implementation, when a value of the second number is greater than or equal to 2, the second number of very sparse pilots are independent of each other, i.e., the second number of very sparse pilots are not associated or correlated with each other. A technology in which two or more pilots are included in one transmission and the pilots are not associated with each other or are independent of each other is referred to as an independent multi-pilot technology, where the pilots independent of each other are referred to as multiple independent pilots. As shown in FIG. 8, w very sparse pilots are included in one transmission. The w very sparse pilots are respectively denoted as P1, P2, ..., Pw, and w is a positive integer greater than 2. A data packet contains information of the w very sparse pilots. For example, the data packet contains index numbers of the w very sparse pilots (i.e., index numbers of the very sparse pilots in a preset pilot set). As such, once a data packet of a terminal device is successfully decoded, information of all very sparse pilots used by the terminal device in this information transmission can be determined, such that interference cancellation can be performed on the pilot signals.

It can be understood that the very sparse pilot scheme can significantly increase the number of pilots without increasing pilot resource overheads, thereby significantly reducing the probability of pilot collision. When the information transmission between the first communication node and the second communication node adopts a very sparse pilot scheme, the second communication node may estimate part of information of a wireless channel according to a very sparse pilot, and does not need to estimate all the information of the wireless channel according to the very sparse pilot. Moreover, the base station or the AP may further extract channel information from data symbols, to alleviate the load of the very sparse pilot.

Further, the independent multi-pilot technology and the very sparse pilot technology may be used in combination, i.e., a plurality of very sparse pilots independent of each other may be used, to further reduce the probability of pilot collision and further increase the number of first communication nodes connected to the second communication node.

In an embodiment, when the second communication node is a base station, the base station may demodulate, by using iterative receivers in each iteration, a corresponding first communication node according to a plurality of very sparse pilots that do not collide (are independent of each other), then reconstruct a data packet and very sparse pilots of the first communication node, and eliminate the data packet and the very sparse pilots corresponding to the first communication node from signals received. The base station iteratively performs the operations, until all the solvable first communication nodes are demodulated, so as to reduce the probability of pilot collision and further increase the number of first communication nodes connected.

In an embodiment, when the value of the second number is greater than or equal to 2, the second number of very sparse pilots may be determined according to information in the information packet. The information in the information packet may include at least one of: a scheduling request; a buffer status report; terminal device capability information; terminal device type information; a number of transmit and receive antennas of a terminal device; a number of transmission data streams supported by a terminal device; or CSI.

In another embodiment, when the value of the second number is greater than or equal to 2, the second number of very sparse pilots may be determined based on one or more pieces of bit information in the information packet. For example, one very sparse pilot may be determined according to one piece of bit information in the information packet. For another example, one very sparse pilot may be determined according to two pieces of bit information in the information packet. For another example, two very sparse pilots are determined according to one piece of bit information in the information packet. The second number and the number of pieces of bit information are not limited in the embodiments of the present disclosure.

In another embodiment, each of the very sparse pilots is determined from a second preset pilot set according to a fifth number of pieces of bit information in the information packet, where the second preset pilot set includes a sixth number of pilots, the fifth number and the sixth number are correlated by a logarithmic function, and the logarithmic function is a logarithmic function with a base of 2. For example, if the sixth number is defined as D, the fifth number is $\log_2(D)$, which is not particularly limited herein. It can be understood that the sixth number may be 64, 128, or more, which is not particularly limited herein.

For the principle of the specific steps and method of this embodiment, reference may be made to the description of the embodiment shown in FIG. 3, and the details will not be described herein again. The difference between this embodiment and the embodiment shown in FIG. 3 lies in that the steps of the embodiment shown in FIG. 3 are executed by a transmit end of the information packet, i.e., the first communication node, and the steps in this embodiment are executed by a receive end of the information packet, i.e., the second communication node.

The information transmission method provided in the above embodiments will be described below by using a very sparse pilot as an example.

In an embodiment, a DMRS set may be defined, which includes 12 reference signals. A DMRS may also be referred to as a DMRS port. In other words, a set including 12 DMRS ports may be defined.

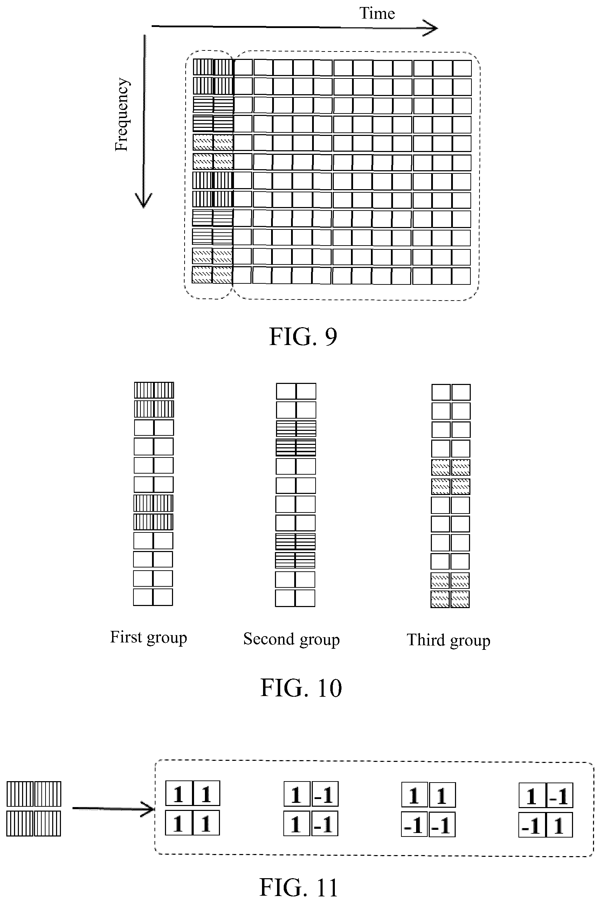

In an embodiment, as shown in FIG. 9, FIG. 9 is a schematic diagram of a defined PRB according to an embodiment. In FIG. 9, a PRB is defined, which includes 14 OFDM symbols (or Discrete Fourier Transform-Spread-Orthogonal Frequency Division Multiplexing (DFT-S-OFDM) or Single-carrier Frequency-Division Multiple Access (SC-FDMA)) symbols in time domain and 12 subcarriers in frequency domain. Each cell represents a subcarrier of an OFDM symbol, and usually is also referred to as an RE, so the PRB includes a total of 12×14=168 REs. Because the first two OFDM symbols are used to carry the DMRSs, i.e., the first two OFDM symbols are used as a DMRS region, the DMRSs account for 1/7 of resource overheads. A region other than the DMRS region is a modulation symbol region.

In an embodiment, as shown in FIG. 10, FIG. 10 is a schematic diagram of a defined DMRS according to an embodiment. 12 DMRSs may be divided into three groups according to positions of REs occupied by the DMRSs. Non-zero-valued symbols (or referred to as non-zero-valued signals, useful signals, etc.) (i.e., the symbols are non-zero values) of a first group of DMRSs are carried on a first RE, and the four DMRS ports may be distinguished by OCCs. Non-zero-valued symbols of a second group of DMRSs are carried on a second RE, and the four DMRS ports may be distinguished by OCCs. Non-zero-valued symbols of a third group of DMRSs are carried on a third RE, and the four DMRS ports may be distinguished by OCCs. In FIG. 10, cells corresponding to the first RE are filled with vertical lines, cells corresponding to the second RE are filled with horizontal lines, cells corresponding to the third RE are filled with wavy lines, and each group of DMRSs takes a value of 0 (i.e., there is no signal) on blank REs not filled with any pattern. It can be seen that for each group of DMRSs, not all REs in the DMRS region have signals. However, even if DMRS ports used by a first communication node (such as a terminal device) have no signal only on some REs in the DMRS region, the REs having no signal cannot be used to transmit information. Therefore, DMRSs (or DMRS ports) in each group of DMRSs also account for 1/7 of resource overheads.

If the non-zero-valued symbols of each group of DMRSs are carried on the same RE, different DMRSs can only be distinguished by non-zero-valued symbols with different values. For example, different DMRS ports may be distinguished by time domain OCCs and frequency domain OCCs. In an embodiment, as shown in FIG. 11, FIG. 11 is a schematic diagram of distinguishing different reference signal ports by OCCs according to an embodiment. Using the four DMRSs in the first group in FIG. 10 as an example, 2-bit OCCs [1,1] and [1,-1] in time domain and 2-bit OCCs [1,1] and [1,-1] in frequency domain may be used jointly to distinguish the four DMRS ports, i.e., for the group of DMRS ports, different DMRS ports are generated by carrying different OCCs on the first RE. The same applies to the four DMRSs in the second group and the four DMRSs in the third group in FIG. 10. Therefore, a total of 12 DMRSs of the defined DMRS set, i.e., 12 DMRS ports, can be obtained.

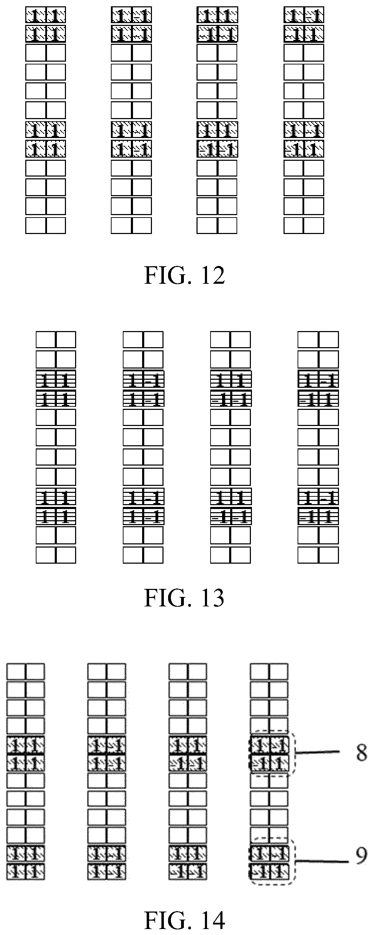

In an embodiment, as shown in FIG. 12, FIG. 12 is a schematic diagram of a DMRS defined using an OCC according to an embodiment. For the four DMRSs in the first group in FIG. 10, 2-bit OCCs [1,1] and [1,-1] in time domain and 2-bit OCCs [1, 1] and [1,-1] in frequency domain may be used jointly to distinguish the four DMRS ports. In FIG. 12, digits in shaded portions of the first to third columns are all 1 from top to bottom, digits in shaded portions of the fourth column are all -1 from top to bottom, digits in shaded portions of the fifth to seventh columns are respectively 1, -1, 1, and -1 from top to bottom, and digits in shaded portions of the eighth column are respectively - 1, 1, -1, and 1 from top to bottom.

In an embodiment, as shown in FIG. 13, FIG. 13 is another schematic diagram of a DMRS defined using an OCC according to an embodiment. For the four DMRSs in the second group in FIG. 10, 2-bit OCCs [1,1] and [1,-1] in time domain and 2-bit OCCs [1, 1] and [1,-1] in frequency domain may be used jointly to distinguish the four DMRS ports. In FIG. 13, digits in shaded portions of the first to third columns are all 1 from top to bottom, digits in shaded portions of the fourth column are all -1 from top to bottom, digits in shaded portions of the fifth to seventh columns are respectively 1, -1, 1, and -1 from top to bottom, and digits in shaded portions of the eighth column are respectively - 1, 1, -1, and 1 from top to bottom.

In an embodiment, as shown in FIG. 14, FIG. 14 is another schematic diagram of a DMRS defined using an OCC according to an embodiment. 8 denotes the first reference signal element (RSE), and 9 denotes the second RSE. For the four DMRSs in the third group in FIG. 10, 2-bit OCCs [1,1] and [1,-1] in time domain and 2-bit OCCs [1, 1] and [1,-1] in frequency domain may be used jointly to distinguish the four DMRS ports. In FIG. 14, digits in shaded portions of the first to third columns are all 1 from top to bottom, digits in shaded portions of the fourth column are all -1 from top to bottom, digits in shaded portions of the fifth to seventh columns are respectively 1, -1, 1, and -1 from top to bottom, and digits in shaded portions of the eighth column are respectively -1, 1, -1, and 1 from top to bottom.

In the present disclosure, reference signals carried on several adjacent REs in time domain and frequency domain may be referred to as an RSE. For example, in FIG. 9 to FIG. 14, reference signals carried on four consecutive REs in time domain and frequency domain are referred to as an RSE. Reference signals on four adjacent shaded cells can be seen as an RSE. In terms of the channel estimation function, in addition to the characteristic that an RSE is formed by adjacent REs in time domain or frequency domain, there is another characteristic that each RSE can estimate one channel value when reference signals are used for channel estimation.

Based on the above definitions, as shown in FIG. 9 to FIG. 14, in the defined DMRS set, each DMRS has two RSEs within the bandwidth of one PRB, so channel values at two positions within the bandwidth of one PRB (i.e., within the bandwidth of 12 subcarriers) can be estimated. In addition, channel values of 12 subcarriers within the bandwidth of one PRB may be obtained by interpolation of the RSE estimates.

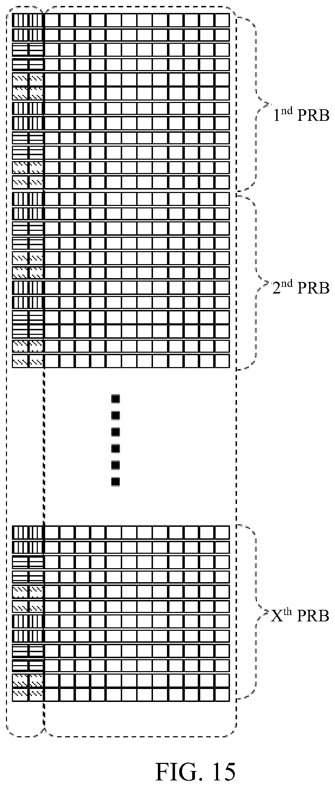

In an embodiment, as shown in FIG. 15, FIG. 15 is a schematic diagram of a PRB-based transmission according to an embodiment. If one transmission includes X PRBs, the 12 DMRSs (or 12 DMRS ports) in the DMRS set are as shown in FIG. 15. Each DMRS has $2 \times X$ RSEs. Therefore, channel values at equally spaced $2 \times X$ positions within the entire transmission bandwidth can be estimated, and then channel values of all $12 \times X$ subcarriers in the transmission bandwidth may be obtained by interpolation.

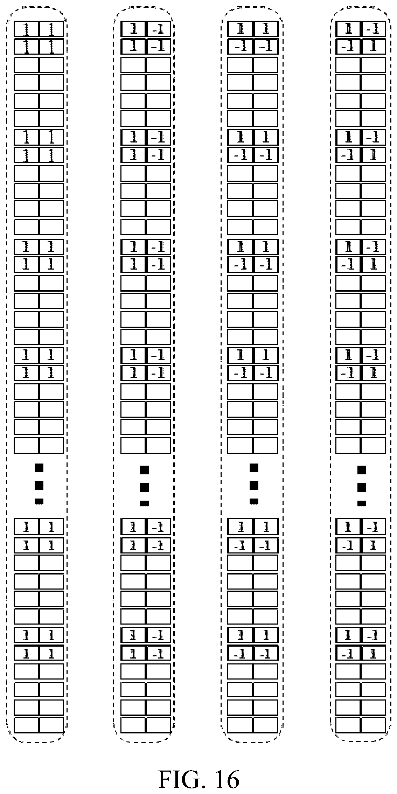

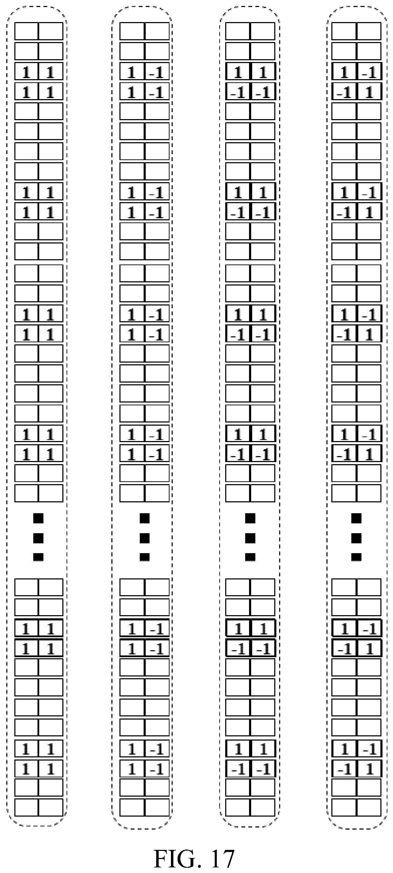

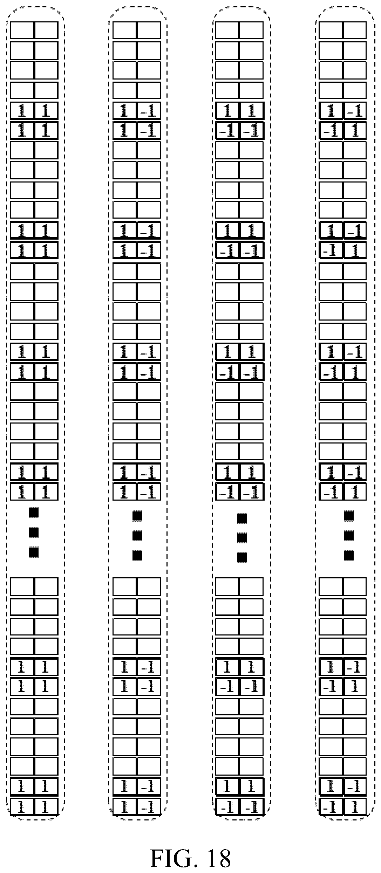

Based on the above embodiments, the 12 DMRSs may be divided into three groups according to positions of REs occupied by the DMRSs. FIG. 16 is another schematic diagram of a defined DMRS according to an embodiment. In FIG. 16, four DMRSs in the first group may be distinguished by OCCs. FIG. 17 is another schematic diagram of a defined DMRS according to an embodiment. In FIG. 17, four DMRSs in the second group may be distinguished by OCCs. FIG. 18 is another schematic diagram of a defined DMRS according to an embodiment. In FIG. 18, four DMRSs in the third group may be distinguished by OCCs.

It can be seen that in order to estimate a channel of each accessing terminal device over the entire transmission bandwidth, DMRSs (or pilots) occupy a large number of resources. In other words, the DMRSs are dense to some extent within the entire transmission bandwidth and cannot be too sparse. In the embodiments shown in FIG. 9 to FIG. 18, the density of DMRSs within the entire transmission bandwidth is two DMRSs per PRB, or two RSEs per PRB.

For the system, the DMRSs account for 1/7 of overheads, i.e., only 12 DMRSs can be designed with 1/7 of system resources. For information transmission in the unconnected transmission state, the collision probability of reference signals independently selected by any two terminal devices is 1/12, which is very high. Therefore, DMRSs severely limit the number of terminal devices that transmit information in the unconnected transmission state.

If a frequency offset needs to be estimated according to the reference signal, resources occupied by each reference signal will continue to increase, i.e., the density of each reference signal in the transmission signal will continue to increase. For example, if the reference signal is repeated again in time domain to estimate the frequency offset, the resources occupied by the reference signal are doubled, i.e., the reference signal accounts for 2/7 of resource overheads. In other words, in order to estimate the frequency selective channel and frequency offset, only 12 DMRSs can be designed with 2/7 of system resources. If the system needs to further cope with a timing offset, the resources occupied by the reference signal will continue to increase. For example, only 12 DMRSs can be designed with 3/7 or even 4/7 of system overheads. As only a small number of DMRSs (i.e., DMRSs ports) can be obtained with such high overheads, the collision probability of DMRSs is very high when the terminal devices transmit information in the unconnected state.

If the multipath channel changes faster in frequency domain, i.e., the frequency selective characteristic is more significant, the density of DMRSs in frequency domain will continue to increase, to ensure the precision of channel estimation. Each group of DMRSs has three RSEs within the bandwidth of each PRB (for example, there are three groups of four adjacent shaded cells), so there may be three estimates on each PRB and $3 \times X$ estimates on X PRBs. Then, channels of all subcarriers of the X PRBs may be obtained by linear interpolation. This reference signal also accounts for 1/7 of overheads of transmission resources, but only 8 DMRSs (8 DMRS ports) can be distinguished, which is less than the number of DMRSs defined above. It can be seen that the channel estimation capability is generally inversely proportional to the number of reference signals.

Therefore, the problem faced when the reference signal is applied to the unconnected transmission scenario is that the reference signal not only needs to estimate the frequency selective channel and the time-frequency offset of the entire transmission channel, but also needs to identify the terminal devices. Therefore, time-frequency resources occupied by the reference signal are increased manyfold. As a result, the number of reference signals is too small when resources are limited, affecting the number of terminal devices that can transmit information in the unconnected transmission scenario.

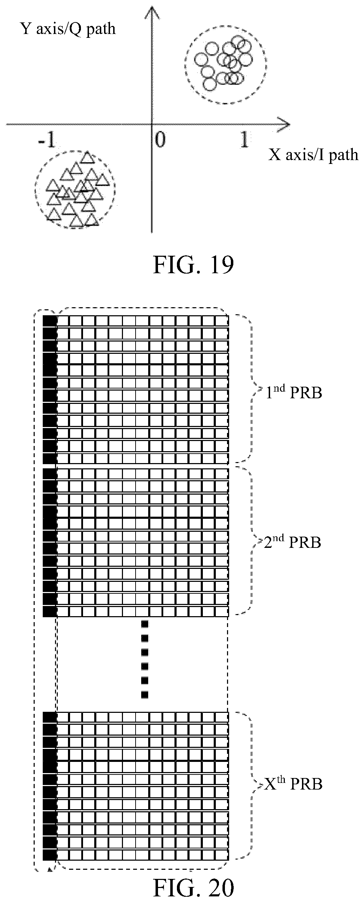

In the present disclosure, a channel estimation technology based on data (not based on reference signals) is used, and a channel of the entire transmission bandwidth and a time-frequency offset are estimated according to characteristics of data, e.g., according to geometric characteristics of a constellation diagram of a modulation symbol. In other words, it is not necessary to estimate the channel of the entire transmission bandwidth and the time-frequency offset according to the reference signals. Using channel estimation as an example, a block flat fading channel is used as an example for ease of description. An amount of rotation and scaling to which the constellation diagram is subjected may be estimated (i.e., channel estimation may be performed) by a partitioning method. In an embodiment, referring to FIG. 19, an amount of rotation and scaling of a BPSK constellation diagram is calculated based on two partitions. For example, the receive end (i.e., the second communication node) divides a two-dimensional signal plane into two partitions through y axis, then respectively calculates a sum of BPSK constellation points in each partition (i.e., modulation symbols corresponding to each constellation point), divides each sum by the number of constellation points in the corresponding partition (i.e., the number of modulation symbols) to obtain constellation point center of the partition, and then calculate the amount of rotation and scaling of the entire constellation diagram according to the constellation point centers of all the partitions. Assuming that the partition on the right side of the y axis (i.e., $x \geq 0$) is partition 1 having a constellation point center c1 and the partition on the left side of the y axis (i.e., x<0) is partition 2 having a constellation point center c2, the constellation point center c2 of partition 2 is rotated clockwise by 90° to obtain c2' , i.e., *c2' = -c2*. Then, the amount of rotation and scaling *c* to which the entire constellation diagram is subjected can be estimated according to c1, c2' . The amount of rotation and scaling *c* may be expressed by the following equation (1):

$$c = \left(c1 + c2\,'\right)/2 \qquad (1).$$

Similarly, the receive end (i.e., the second communication node) may also divide the two-dimensional signal plane into two partitions through x axis, and calculate the amount of rotation and scaling to which the entire constellation diagram is subjected by using the above method.

In the presence of rotation and noise, a handover may occur over some modulation symbols. In order to estimate the amount of rotation and scaling more accurately, the receive end (i.e., the second communication node) usually needs to use the above two-partition method. For the two-partition method, two amounts of rotation and scaling of the constellation diagram are respectively calculated according to the above estimation method, then modulus values of the two amounts of rotation and scaling are respectively calculated, and the amount of rotation and scaling corresponding to a larger one of the two modulus values is determined as a target amount of rotation and scaling of the constellation diagram. Therefore, the receive end (i.e., the second communication node) can estimate the block flat fading channel according to the above partitioning method, thereby greatly reducing the task of reference signals, and minimizing resources occupied by each reference signal, i.e., minimizing the density of each reference signal in the transmission signal, and maximizing the number of reference signals. As such, the number of terminal devices that transmit information in the unconnected transmission scenario can be increased.

Therefore, in the embodiments of the present disclosure, the task of the reference signal in the scheme of the present disclosure is much smaller than that in related schemes, so resources occupied by each reference signal in the embodiments of the present disclosure are less than those occupied by each reference signal in related schemes. Therefore, in the case of fixed overheads, the number of reference signals in the present disclosure is larger than the number of reference signals in related schemes.

Therefore, in the present disclosure, the reference signal is not used to estimate the channel in the entire transmission bandwidth, and is not used to estimate the time-frequency offset.

FIG. 20 is a schematic diagram of a defined reference signal. In an embodiment, as shown in FIG. 20, it is assumed that the reference signal occupies one OFDM symbol, one transmission includes time-frequency resources of X PRBs, and each PRB includes 14 OFDM (or DFT-S-OFDM or SC-FDMA) symbols in time domain and 12 subcarriers in frequency domain. The first one OFDM symbol is used to carry a DMRS, i.e., the first one OFDM symbol is used as a very sparse pilot region. In this case, 1/14 of resources are used for transmitting the reference signal, i.e., 12×X REs are used for transmitting the reference signal. A region other than the very sparse pilot region is a modulation symbol region.

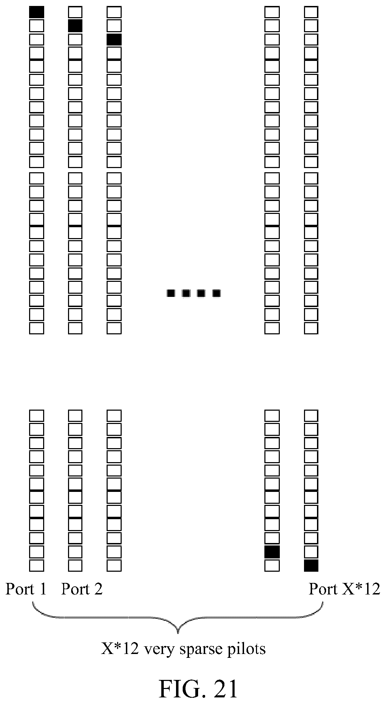

FIG. 21 is a schematic diagram of another system-defined reference signal (i.e., very sparse pilot). In an embodiment, as shown in FIG. 21, each reference signal has a non-zero-valued symbol (non-zero-valued signal, or useful signal) on only one RE, and there is no signal on the other REs (i.e., the value is 0). Therefore, a DMRS region may account for 1/14 of overheads, and a total of 12×X reference signals can be distinguished. If there are 6 PRBs, and each PRB accounts for 1/14 of resource overheads, 6×12=72 reference signals can be distinguished. The number of reference signals is much greater than the number of reference signals in an NR system (where the number of reference signals in the NR system is 8 or 12, and the reference signals in the NR system still account for 1/7 of system overheads).

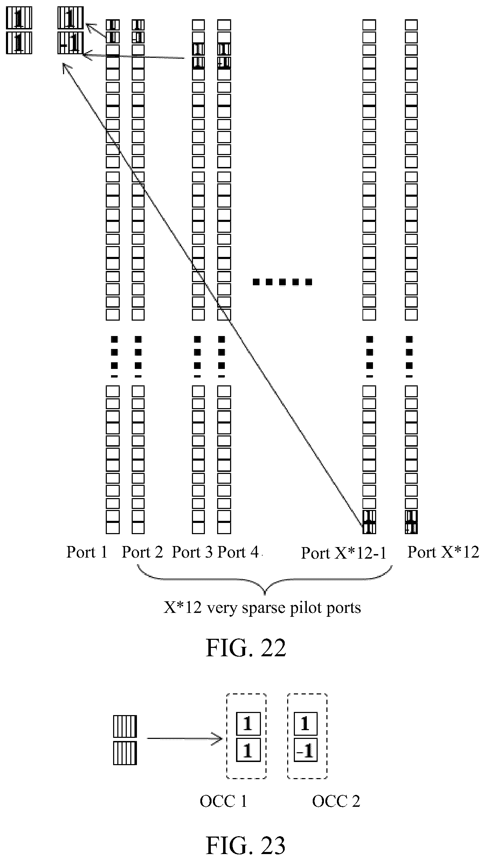

FIG. 22 is a schematic diagram of another defined reference signal (i.e., very sparse pilot). In an embodiment, as shown in FIG. 22, each system-defined reference signal has a non-zero-valued symbol (non-zero-valued signal, or useful signal) on only two REs, two reference signals may be distinguished by a 2-bit OCC, i.e., [1,1] and [1,-1], for every two REs, and there is no signal on the other REs (i.e., the value is 0). Therefore, a DMRS region may account for 1/14 of overheads, and a total of 12×X reference signals can be distinguished. If there are 6 PRBs, and each PRB accounts for 1/14 of resource overheads, 6×12=72 reference signals can be distinguished. The number of reference signals is much greater than the number of reference signals in an NR system (where the number of reference signals in the NR system is 8 or 12). Therefore, the number of non-zero-valued symbols of the very sparse pilot is proportional to the number of PRBs.

In an embodiment, as shown in FIG. 23, FIG. 23 is a schematic diagram of generating a DMRS port according to an embodiment. Different DMRS ports are generated by carrying different OCCs (such as OCC 1 and OCC 2) on two REs. In FIG. 23, the REs are represented by two cells filled with vertical lines.

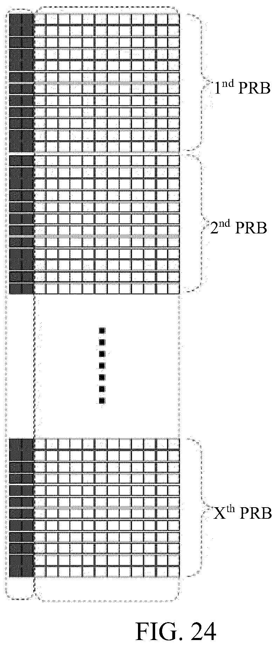

FIG. 24 is another schematic diagram of a defined reference signal according to an embodiment. In an embodiment, as shown in FIG. 24 ,the system-defined reference signal occupies two OFDM symbols.

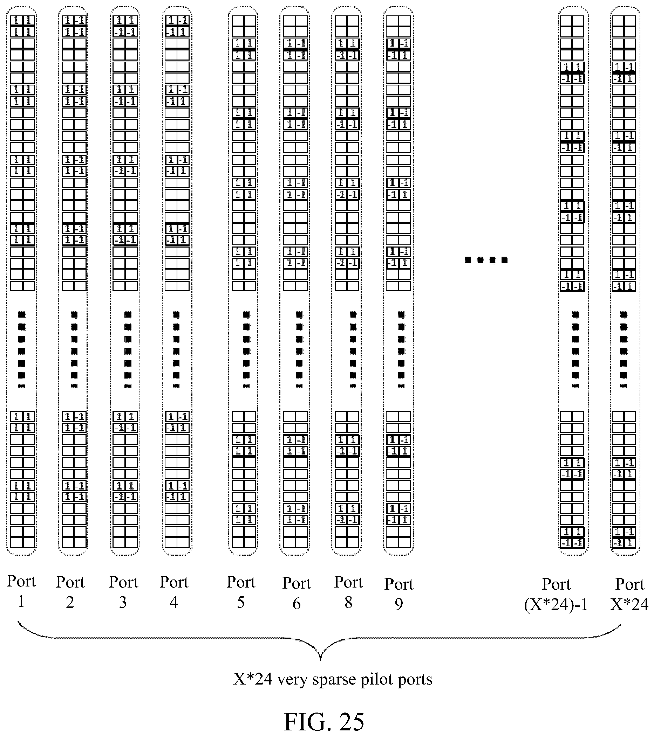

FIG. 25 is another schematic diagram of a defined reference signal according to an embodiment. In an embodiment, as shown in FIG. 25, each system-defined reference signal has a non-zero-valued symbol (non-zero-valued signal or useful signal) on only a group of four adjacent REs, but one group of four adjacent REs is multiplexed by four reference signals. Four reference signals multiplexing four adjacent REs in the same group may be distinguished by OCCs. Therefore, when one transmission includes X PRBs, and each PRB occupies 1/7 of overheads, a total of $24 \times X$ reference signals can be distinguished. If one transmission includes 6 PRBs, and each PRB occupies 1/7 of resource overheads, $6 \times 24=144$ reference signals can be distinguished. Therefore, the number of reference signals is much greater than the number of reference signals in an NR system (where the number of reference signals in the NR system is 8 or 12), and it also indicates that the number of very sparse pilots is proportional to the number of PRBs.

It should be noted that the numerical values shown in the embodiments are provided by way of example only and are not intended to limit the present disclosure, and the values may be adjusted according to actual situations.

It can be seen that the very sparse pilot is a pilot having a small number of non-zero-valued elements (i.e., non-zero-valued symbols) in the preset pilot set, for example, only 1 to 4 non-zero-valued elements. Therefore, the scheme using the very sparse pilot can significantly increase the number of pilots without increasing pilot resource overheads, thereby significantly reducing the probability of pilot collision. In addition, the base station may estimate part of information of the wireless channel according to the very sparse pilot, and does not need to estimate all the information of the wireless channel according to the very sparse pilot. Moreover, the base station may further extract channel information from modulation symbols, and implement equalization of the modulation symbols by using the channel information.

It should be noted that the very sparse pilot is only used for spatial domain combining, but cannot be used for channel equalization, so the very sparse pilot may be regarded as a reference signal for spatial domain combining, which is not particularly limited herein.

It should also be noted that although the very sparse reference signals (i.e., very sparse pilots) shown in FIG. 20, FIG. 21, FIG. 22, and FIG. 23 are all located on the first symbol of the transmission resource, or on the first symbol and the second symbol of the transmission resource, the position of the very sparse reference signal is not limited in the present disclosure. For example, the very sparse reference signal may also be located in the middle of the transmission resource.

It can be understood that the term "information" in information transmission in all the above embodiments, refers to information in a broad sense, i.e., the information may be service data or information used for system control, i.e., signaling; or the information may include bit data that needs to be transmitted, such as service bit data or signaling bit data. Information may also be expressed using other terms such as message, information, and payload.

It can be understood that the first communication node in all the above embodiments may be a terminal device, for example, a mobile terminal device such as a mobile phone, a smartphone, a notebook computer, a Personal Digital Assistant (PDA), a tablet computer (PAD), or a navigation device, or may be an Internet of Things (IoT) device, etc., which is not particularly limited herein.

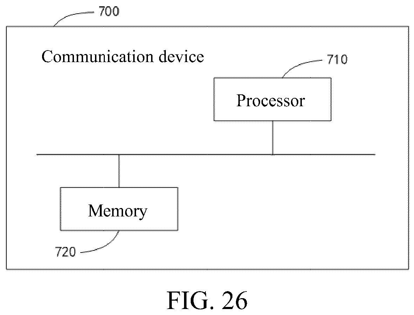

In addition, referring to FIG. 26, an embodiment of the present disclosure provides a communication device. The communication device 700 includes a memory 720, a processor 710, and a computer program stored in the memory 720 and executable by the processor 710.

The processor 710 and the memory 720 may be connected by a bus or in other ways.

The memory 720, as a non-transitory computer-readable storage medium, may be configured for storing a non-transitory software program and a non-transitory computer-executable program. In addition, the memory 720 may include a high-speed random access memory, and may also include a non-transitory memory, e.g., at least one magnetic disk storage device, flash memory device, or other non-transitory solid-state storage device. In some implementations, the memory 720 optionally includes memories located remotely from the processor 710, and the remote memories may be connected to the processor 710 via a network. Examples of the network include, but not limited to, the Internet, an intranet, a local area network, a mobile communication network, and combinations thereof.

The non-transitory software program and instructions required to implement the information transmission method of the foregoing embodiments are stored in the memory 720 which, when executed by the processor 710, cause the processor 710 to implement the information transmission method of the foregoing embodiments, for example, implement the method step S110 in FIG. 1, the method steps S210 to S220 in FIG. 2, the method steps S310 to S320 in FIG. 3, the method step S410 in FIG. 4, the method step S510 in FIG. 5, or the method step S610 in FIG. 6.

The device embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by a processor or controller, for example, by a processor in the device embodiment described above, may cause the processor to implement the information transmission method of the foregoing embodiments, implement the method step S110 in FIG. 1, the method steps S210 to S220 in FIG. 2, the method steps S310 to S320 in FIG. 3, the method step S410 in FIG. 4, the method step S510 in FIG. 5, or the method step S610 in FIG. 6.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

**Claims**

1.   An information transmission method, applied to a first communication node, the method comprising:
    in an unconnected state, transmitting an information packet to a second communication node, wherein the information packet at least comprises one of:

       a scheduling request (SR);
       a buffer status report (BSR);
       terminal device capability information;
       terminal device type information;
       a number of transmit and receive antennas of a terminal device;
       a number of transmission data streams supported by a terminal device; or
       channel state information (CSI).

2.   The method of claim 1, wherein the information packet further comprises terminal device identification information.

3.   The method of claim 1, wherein when the information packet comprises the CSI, the CSI comprises at least one of:

       a pre-coding matrix indication (PMI);
       a channel quality indicator (CQI);
       a rank indication (RI);
       a Synchronization Signal/Physical Broadcast Channel block (SSB) resource indicator (SSBRI); or
       a reference signal power.

4.   The method of claim 1, wherein transmitting an information packet to a second communication node comprises:

       determining a first number of pilots; and
       transmitting the information packet and the first number of pilots to the second communication node, wherein the first number is greater than 1.

5.   The method of claim 4, wherein:

       the first number of pilots are independent of each other;
       or
       the first number of pilots are determined according to information in the information packet;
       or
       the first number of pilots are determined according to one or more pieces of bit information in the information packet;

or
each of the pilots is determined from a first preset pilot set according to a seventh number of pieces of bit information in the information packet, wherein the first preset pilot set comprises an eighth number of pilots, the seventh number and the eighth number are correlated by a logarithmic function, and the logarithmic function is a logarithmic function with a base of 2.

**6.** The method of claim 1, wherein transmitting an information packet to a second communication node comprises:

determining a second number of very sparse pilots; and
transmitting the information packet and the second number of very sparse pilots to the second communication node, wherein the second number is greater than or equal to 1.

**7.** The method of claim 6, wherein each of the very sparse pilots comprises a third number of non-zero-valued symbols, the third number is greater than 0 and less than 5, the third number of non-zero-valued symbols are carried on a fourth number of resource elements (REs) adjacent in time domain and frequency domain, or on a fourth number of symbols in chronological order, or on a fourth number of REs on subcarriers adjacent in frequency domain, and the fourth number is equal to the third number.

**8.** The method of claim 6 or 7, wherein a symbol length of each of the very sparse pilots is greater than 24.

**9.** The method of claim 7, wherein:

a value of the third number is 1;
or
a value of the third number is 2, the third number of non-zero-valued symbols constitute a non-zero-valued symbol pair [$p1,p2$], and a value of [$p1,p2$] is [$a1,a2$] or [$b1,b2$], [$a1,a2$] and [$b1,b2$] being orthogonal;
or
a value of the third number is 2, the third number of non-zero-valued symbols constitute a non-zero-valued symbol pair [$p1,p2$], and a value of [$p1,p2$] at least comprises the following cases:

$$[p1, p2] = [1,1];$$

$$[p1, p2] = [1,-1];$$

$$[p1, p2] = [1, j];$$

and

$$[p1, p2] = [1, -j];$$

or
a value of the third number is 4, the third number of non-zero-valued symbols constitute a non-zero-valued symbol group [$p1,p2,p3,p4$], and a value of [$p1,p2,p3,p4$] is [$a1,a2,a3,a4$], [$b1,b2,b3,b4$], [$c1,c2,c3,c4$], or [$d1,d2,d3,d4$], [$a1,a2,a3,a4$], [$b1,b2,b3,b4$], [$c1,c2,c3,c4$], and [$d1,d2,d3,d4$] being orthogonal;
or
a value of the third number is 4, the third number of non-zero-valued symbols constitute a non-zero-valued symbol group [$p1,p2,p3,p4$], and a value of [$p1,p2,p3,p4$] at least comprises the following cases:

$$[p1, p2, p3, p4] = [1,1,1,1];$$

$$[p1, p2, p3, p4] = [1,1,-1,-1];$$

$$[p1, p2, p3, p4] = [1,-1,1,-1];$$

$$[p1, p2, p3, p4] = [1,-1,-1,1];$$

$$[p1, p2, p3, p4] = [1, 1, j, -j];$$

$$[p1, p2, p3, p4] = [1, 1, -j, j];$$

$$[p1, p2, p3, p4] = [1, -1, j, j];$$

$$[p1, p2, p3, p4] = [1, -1, -j, -j];$$

$$[p1, p2, p3, p4] = [1, j, 1, -j];$$

$$[p1, p2, p3, p4] = [1, j, -1, j];$$

$$[p1, p2, p3, p4] = [1, -j, 1, j];$$

$$[p1, p2, p3, p4] = [1, -j, -1, -j];$$

$$[p1, p2, p3, p4] = [1, j, j, -1];$$

$$[p1, p2, p3, p4] = [1, j, -j, 1];$$

$$[p1, p2, p3, p4] = [1, -j, j, 1];$$

$$[p1, p2, p3, p4] = [1, -j, -j, -1];$$

$$[p1, p2, p3, p4] = [1, 1, 1, -1];$$

$$[p1, p2, p3, p4] = [1, 1, -1, 1];$$

$$[p1, p2, p3, p4] = [1, -1, 1, 1];$$

$$[p1, p2, p3, p4] = [1, -1, -1, -1];$$

$$[p1, p2, p3, p4] = [1, 1, j, j];$$

$$[p1, p2, p3, p4] = [1, 1, -j, -j];$$

$$[p1, p2, p3, p4] = [1, -1, j, -j];$$

$$[p1, p2, p3, p4] = [1, -1, -j, j];$$

$$[p1, p2, p3, p4] = [1, j, 1, j];$$

$$[p1, p2, p3, p4] = [1, j, -1, -j];$$

$$[p1, p2, p3, p4] = [1, -j, 1, -j];$$

$$[p1, p2, p3, p4] = [1, -j, -1, j];$$

$$[p1, p2, p3, p4] = [1, j, j, 1];$$

$$[p1, p2, p3, p4] = [1, j, -j, -1];$$

$$[p1, p2, p3, p4] = [1, -j, j, -1];$$

$$[p1, p2, p3, p4] = [1, -j, -j, 1];$$

$$[p1, p2, p3, p4] = [1, 1, 1, j];$$

$$[p1, p2, p3, p4] = [1, 1, -1, -j];$$

$$[p1, p2, p3, p4] = [1, -1, 1, -j];$$

$$[p1, p2, p3, p4] = [1, -1, -1, j];$$

$$[p1, p2, p3, p4] = [1, 1, j, 1];$$

$$[p1, p2, p3, p4] = [1, 1, -j, -1];$$

$$[p1, p2, p3, p4] = [1, -1, j, -1];$$

$$[p1, p2, p3, p4] = [1, -1, -j, 1];$$

$$[p1, p2, p3, p4] = [1, j, 1, 1];$$

$$[p1, p2, p3, p4] = [1, j, -1, -1];$$

$$[p1, p2, p3, p4] = [1, -j, 1, -1];$$

$$[p1, p2, p3, p4] = [1, -j, -1, 1];$$

$$[p1, p2, p3, p4] = [1, j, j, -j];$$

$$[p1, p2, p3, p4] = [1, j, -j, j];$$

$$[p1, p2, p3, p4] = [1, -j, j, j];$$

$$[p1, p2, p3, p4] = [1, -j, -j, -j];$$

$$[p1, p2, p3, p4] = [1, 1, 1, -j];$$

$$[p1, p2, p3, p4] = [1, 1, -1, j];$$

$$[p1, p2, p3, p4] = [1, -1, 1, j];$$

$$[p1, p2, p3, p4] = [1, -1, -1, -j];$$

$$[p1, p2, p3, p4] = [1, 1, j, -1];$$

$$[p1, p2, p3, p4] = [1, 1, -j, 1];$$

$$[p1, p2, p3, p4] = [1, -1, j, 1];$$

$$[p1, p2, p3, p4] = [1, -1, -j, -j];$$

$$[p1, p2, p3, p4] = [1, j, 1, -1];$$

$$[p1, p2, p3, p4] = [1, j, -1, 1];$$

$$[p1, p2, p3, p4] = [1, -j, 1, 1];$$

$$[p1, p2, p3, p4] = [1, -j, -1, -1];$$

$$[p1, p2, p3, p4] = [1, j, j, j];$$

$$[p1, p2, p3, p4] = [1, j, -j, -j];$$

$$[p1, p2, p3, p4] = [1, -j, j, -j];$$

and

$$[p1, p2, p3, p4] = [1, -j, -j, j].$$

**10.** The method of claim 6, wherein when a value of the second number is greater than or equal to 2,

the second number of very sparse pilots are independent of each other;
or
the second number of very sparse pilots are determined according to information in the information packet;
or
the second number of very sparse pilots are determined according to one or more pieces of bit information in the information packet;
or
each of the very sparse pilots is determined from a second preset pilot set according to a fifth number of pieces of bit information in the information packet, wherein the second preset pilot set comprises a sixth number of pilots, the fifth number and the sixth number are correlated by a logarithmic function, and the logarithmic function is a logarithmic function with a base of 2.

**11.** The method of claim 6, wherein a value of the second number is 1 or 2.

**12.** An information transmission method, applied to a second communication node, the method comprising:
receiving an information packet sent by a first communication node in an unconnected state, wherein the information packet at least comprises one of:

a scheduling request (SR);

a buffer status report (BSR);
terminal device capability information;
terminal device type information;
a number of transmit and receive antennas of a terminal device;
a number of transmission data streams supported by a terminal device; or
channel state information (CSI).

13. The method of claim 12, wherein the information packet further comprises terminal device identification information.

14. The method of claim 12, wherein when the information packet comprises the CSI, the CSI comprises at least one of:

a pre-coding matrix indication (PMI);
a channel quality indicator (CQI);
a rank indication (RI);
a Synchronization Signal/Physical Broadcast Channel block (SSB) resource indicator (SSBRI); or
a reference signal receiving power.

15. The method of claim 12, wherein receiving an information packet sent by a first communication node in an unconnected state comprises:
receiving the information packet and a first number of pilots sent by the first communication node in the unconnected state, wherein the first number is greater than 1.

16. The method of claim 15, wherein:

the first number of pilots are independent of each other;
or
the first number of pilots are determined according to information in the information packet;
or
the first number of pilots are determined according to one or more pieces of bit information in the information packet;
or
each of the pilots is determined from a first preset pilot set according to a seventh number of pieces of bit information in the information packet, wherein the first preset pilot set comprises an eighth number of pilots, the seventh number and the eighth number are correlated by a logarithmic function, and the logarithmic function is a logarithmic function with a base of 2.

17. The method of claim 12, wherein receiving an information packet sent by a first communication node in an unconnected state comprises:
receiving the information packet and a second number of very sparse pilots sent by the first communication node in the unconnected state, wherein the second number is greater than or equal to 1.

18. The method of claim 17, wherein each of the very sparse pilots comprises a third number of non-zero-valued symbols, the third number is greater than 0 and less than 5, the third number of non-zero-valued symbols are carried on a fourth number of resource elements (REs) adjacent in time domain and frequency domain, or on a fourth number of symbols in chronological order, or on a fourth number of REs on subcarriers adjacent in frequency domain, and the fourth number is equal to the third number.

19. The method of claim 17 or 18, wherein a symbol length of each of the very sparse pilots is greater than 24.

20. The method of claim 18, wherein:

a value of the third number is 1, and a value of the non-zero-valued symbol is 1;
or
a value of the third number is 2, the third number of non-zero-valued symbols constitute a non-zero-valued symbol pair $[p1,p2]$, and a value of $[p1,p2]$ is $[a1,a2]$ or $[b1,b2]$, $[a1,a2]$ and $[b1,b2]$ being orthogonal;
or
a value of the third number is 2, the third number of non-zero-valued symbols constitute a non-zero-valued symbol pair $[p1,p2]$, and a value of $[p1,p2]$ at least comprises the following cases:

$$[p1, p2] = [1,1];$$

$$[p1, p2] = [1, -1];$$

$$[p1, p2] = [1, j];$$

and

$$[p1, p2] = [1, -j];$$

or a value of the third number is 4, the third number of non-zero-valued symbols constitute a non-zero-valued symbol group [p1,p2,p3,p4], and a value of [p1,p2,p3,p4] is [a1,a2,a3,a4], [b1,b2,b3,b4], [c1,c2,c3,c4], or [d1,d2,d3,d4], [a1,a2,a3,a4], [b1,b2,b3,b4], [c1,c2,c3,c4], and [d1,d2,d3,d4] being orthogonal;

or

a value of the third number is 4, the third number of non-zero-valued symbols constitute a non-zero-valued symbol group [p1,p2,p3,p4], and a value of [p1,p2,p3,p4] at least comprises the following cases:

$$[p1, p2, p3, p4] = [1,1,1,1];$$

$$[p1, p2, p3, p4] = [1,1, -1, -1];$$

$$[p1, p2, p3, p4] = [1, -1,1, -1];$$

$$[p1, p2, p3, p4] = [1, -1, -1,1];$$

$$[p1, p2, p3, p4] = [1,1, j, -j];$$

$$[p1, p2, p3, p4] = [1,1, -j, j];$$

$$[p1, p2, p3, p4] = [1, -1, j, j];$$

$$[p1, p2, p3, p4] = [1, -1, -j, -j];$$

$$[p1, p2, p3, p4] = [1, j, 1, -j];$$

$$[p1, p2, p3, p4] = [1, j, -1, j];$$

$$[p1, p2, p3, p4] = [1, -j, 1, j];$$

$$[p1, p2, p3, p4] = [1, -j, -1, -j];$$

$$[p1, p2, p3, p4] = [1, j, j, -1];$$

$$[p1, p2, p3, p4] = [1, j, -j, 1];$$

$$[p1, p2, p3, p4] = [1, -j, j, 1];$$

$$[p1, p2, p3, p4] = [1, -j, -j, -1];$$

$$[p1, p2, p3, p4] = [1,1,1, -1];$$

$$[p1, p2, p3, p4] = [1,1, -1,1];$$

$$[p1, p2, p3, p4] = [1, -1,1,1];$$

$$[p1, p2, p3, p4] = [1, -1, -1, -1];$$

$$[p1, p2, p3, p4] = [1,1, j, j];$$

$$[p1, p2, p3, p4] = [1,1, -j, -j];$$

$$[p1, p2, p3, p4] = [1, -1, j, -j];$$

$$[p1, p2, p3, p4] = [1, -1, -j, j];$$

$$[p1, p2, p3, p4] = [1, j, 1, j];$$

$$[p1, p2, p3, p4] = [1, j, -1, -j];$$

$$[p1, p2, p3, p4] = [1, -j, 1, -j];$$

$$[p1, p2, p3, p4] = [1, -j, -1, j];$$

$$[p1, p2, p3, p4] = [1, j, j, 1];$$

$$[p1, p2, p3, p4] = [1, j, -j, -1];$$

$$[p1, p2, p3, p4] = [1, -j, j, -1];$$

$$[p1, p2, p3, p4] = [1, -j, -j, 1];$$

$$[p1, p2, p3, p4] = [1,1,1, j];$$

$$[p1, p2, p3, p4] = [1,1, -1, -j];$$

$$[p1, p2, p3, p4] = [1, -1,1, -j];$$

$$[p1, p2, p3, p4] = [1, -1, -1, j];$$

$$[p1, p2, p3, p4] = [1,1,j,1];$$

$$[p1, p2, p3, p4] = [1,1,-j,-1];$$

$$[p1, p2, p3, p4] = [1,-1,j,-1];$$

$$[p1, p2, p3, p4] = [1,-1,-j,1];$$

$$[p1, p2, p3, p4] = [1,j,1,1];$$

$$[p1, p2, p3, p4] = [1,j,-1,-1];$$

$$[p1, p2, p3, p4] = [1,-j,1,-1];$$

$$[p1, p2, p3, p4] = [1,-j,-1,1];$$

$$[p1, p2, p3, p4] = [1,j,j,-j];$$

$$[p1, p2, p3, p4] = [1,j,-j,j];$$

$$[p1, p2, p3, p4] = [1,-j,j,j];$$

$$[p1, p2, p3, p4] = [1,-j,-j,-j];$$

$$[p1, p2, p3, p4] = [1,1,1,-j];$$

$$[p1, p2, p3, p4] = [1,1,-1,j];$$

$$[p1, p2, p3, p4] = [1,-1,1,j];$$

$$[p1, p2, p3, p4] = [1,-1,-1,-j];$$

$$[p1, p2, p3, p4] = [1,1,j,-1];$$

$$[p1, p2, p3, p4] = [1,1,-j,1];$$

$$[p1, p2, p3, p4] = [1,-1,j,1];$$

$$[p1, p2, p3, p4] = [1,-1,-j,-j];$$

$$[p1, p2, p3, p4] = [1,j,1,-1];$$

$$[p1, p2, p3, p4] = [1,j,-1,1];$$

$$[p1, p2, p3, p4] = [1,-j,1,1];$$

$$[p1, p2, p3, p4] = [1, -j, -1, -1];$$

$$[p1, p2, p3, p4] = [1, j, j, j];$$

$$[p1, p2, p3, p4] = [1, j, -j, -j];$$

$$[p1, p2, p3, p4] = [1, -j, j, -j];$$

and

$$[p1, p2, p3, p4] = [1, -j, -j, j].$$

21. The method of claim 17, wherein when a value of the second number is greater than or equal to 2,

the second number of very sparse pilots are independent of each other;
or
the second number of very sparse pilots are determined according to information in the information packet;
or
the second number of very sparse pilots are determined according to one or more pieces of bit information in the information packet;
or
each of the very sparse pilots is determined from a second preset pilot set according to a fifth number of pieces of bit information in the information packet, wherein the second preset pilot set comprises a sixth number of pilots, the fifth number and the sixth number are correlated by a logarithmic function, and the logarithmic function is a logarithmic function with a base of 2.

22. The method of claim 17, wherein a value of the second number is 1 or 2.

23. A communication device, comprising:

at least one processor; and
at least one memory, configured for storing at least one program,
wherein the at least one program, when executed by the at least one processor, causes the at least one processor to perform the information transmission method of any one of claims 1 to 22.

24. A computer-readable storage medium, storing a computer-executable instruction which, when executed by a processor, causes the processor to perform the information transmission method of any one of claims 1 to 22.

In an unconnected state, transmit an information packet to a second communication node, where the information packet at least includes one of: an SR; a BSR; terminal device capability information; terminal device type information; a number of transmit and receive antennas of a terminal device; a number of transmission data streams supported by a terminal device; or CSI.

~S110

## FIG. 1

Determine a first number of pilots ~S210

Transmit the information packet and the first number of pilots to the second communication node, where the first number is greater than 1 ~S220

## FIG. 2

Determine a second number of very sparse pilots ~S310

Transmit the information packet and the second number of very sparse pilots to the second communication node, where the second number is greater than or equal to 1 ~S320

## FIG. 3

Receive an information packet sent by a first communication node in an unconnected state, where the information packet at least includes one of: an SR; a BSR; terminal device capability information; terminal device type information; a number of transmit and receive antennas of a terminal device; a number of transmission data streams supported by a terminal device; or CSI.

S410

**FIG. 4**

Receive the information packet and a first number of pilots sent by the first communication node in the unconnected state, where the first number is greater than 1

S510

**FIG. 5**

Receive the information packet and a second number of very sparse pilots sent by the first communication node in the unconnected state, where the second number is greater than or equal to 1

S610

**FIG. 6**

| P1 | P2 | Information packet |
|---|---|---|

**FIG. 7**

| P1 | P2 | ······ | Pw | Information packet |
|---|---|---|---|---|

**FIG. 8**

FIG. 9

First group    Second group    Third group

FIG. 10

FIG. 11

FIG. 12

FIG. 13

FIG. 14

1ⁿᵈ PRB

2ⁿᵈ PRB

Xᵗʰ PRB

FIG. 15

FIG. 16

FIG. 17

FIG. 18

FIG. 19

1nd PRB

2nd PRB

Xth PRB

FIG. 20

Port 1    Port 2                                    Port X*12

X*12 very sparse pilots

FIG. 21

Port 1   Port 2  Port 3 Port 4          Port X*12-1   Port X*12

X*12 very sparse pilot ports

FIG. 22

OCC 1          OCC 2

FIG. 23

$1^{nd}$ PRB

$2^{nd}$ PRB

$X^{th}$ PRB

FIG. 24

Port 1    Port 2    Port 3    Port 4    Port 5    Port 6    Port 8    Port 9      Port (X*24)-1    Port X*24

X*24 very sparse pilot ports

FIG. 25

EP 4 586 682 A1

FIG. 26

## INTERNATIONAL SEARCH REPORT

| International application No. |
| --- |
| **PCT/CN2023/134405** |

**A. CLASSIFICATION OF SUBJECT MATTER**

H04W 28/02(2009.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, WPABSC, CJFD: 非激活, 非连接, 空闲, 能力信息, 信道状态信息, 状态报告, non-activated, non-connected, idle state, capability information, channel state information, csi, state reporting

**C. DOCUMENTS CONSIDERED TO BE RELEVANT**

| Category* | Citation of document, with indication, where appropriate, of the relevant passages | Relevant to claim No. |
| --- | --- | --- |
| X | CN 113966631 A (BEIJING XIAOMI MOBILE SOFTWARE CO., LTD.) 21 January 2022 (2022-01-21) description, paragraphs [0004]-[0303] | 1-24 |
| X | CN 113366779 A (HUAWEI TECHNOLOGIES CO., LTD.) 07 September 2021 (2021-09-07) description, paragraphs [0004]-[0120] | 1-24 |
| A | CN 109392147 A (HUAWEI TECHNOLOGIES CO., LTD.) 26 February 2019 (2019-02-26) entire document | 1-24 |
| A | CN 114698151 A (VIVO MOBILE COMMUNICATION CO., LTD.) 01 July 2022 (2022-07-01) entire document | 1-24 |
| A | CN 115022969 A (HUAWEI TECHNOLOGIES CO., LTD.) 06 September 2022 (2022-09-06) entire document | 1-24 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **28 February 2024** | **29 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/134405** |

| Patent document cited in search report | | | Publication date (day/month/year) | Patent family member(s) | | | Publication date (day/month/year) |
| --- | --- | --- | --- | --- | --- | --- | --- |
| CN | 113966631 | A | 21 January 2022 | None | | | |
| CN | 113366779 | A | 07 September 2021 | None | | | |
| CN | 109392147 | A | 26 February 2019 | US | 2020178278 | A1 | 04 June 2020 |
| | | | | US | 11240832 | B2 | 01 February 2022 |
| | | | | EP | 3654715 | A1 | 20 May 2020 |
| | | | | EP | 3654715 | A4 | 08 July 2020 |
| | | | | WO | 2019029732 | A1 | 14 February 2019 |
| CN | 114698151 | A | 01 July 2022 | None | | | |
| CN | 115022969 | A | 06 September 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211521395